# EUROPEAN PATENT APPLICATION

(11) **EP 4 852 122 A1**
(43) Date of publication of application: **09.12.2026**
(21) Application number: 24922536.8
(22) Date of filing: 23.09.2024
(51) Int. Cl.: H01M 10/0567, H01M 10/0562, H01M 10/42, H01M 4/62, H01M 4/505, H01M 4/583, H01M 4/38, H01M 4/66

(54) **ALL-SOLID-STATE SECONDARY BATTERY**

(30) Priority: 31.01.2024 KR 20240015037
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR)
(74) Representative: Michalski Hüttermann & Partner mbB
(86) International application number: PCT/KR2024/014332
(87) International publication number: WO 2025/164871

(57) **Abstract**

An all-solid-state secondary battery includes a cathode layer, an anode layer, and a solid electrolyte layer between the cathode layer and the anode layer, wherein the anode layer includes an anode current collector and a first anode active material layer on one side of the anode current collector, the solid electrolyte layer includes a sulfide-based solid electrolyte and an inorganic filler, and the inorganic filler includes a lithium metal oxyhalide represented by Formula 1 below:

Formula 1 LiₐM_{b}O_{c}Cl_{d}

wherein, in Formula 1, 0<a≤3, 0<b≤3, 0<c≤3, 0<d≤8, c<d, a/(a+b+c+d)<0.5, and M is a metal selected from Groups 3 to 15 of the Periodic Table of the Elements.

## Description

### Technical Field

The present disclosure relates to an all-solid-state secondary battery.

### Background Art

Recently, in accordance with industrial demand, batteries having high energy density and high safety have been actively developed. For example, lithium batteries are used in various applications including information devices, communication devices, and vehicles. Since vehicles affect people's lives, safety is also important.

A short circuit in lithium batteries employing a liquid electrolyte may increase the likelihood of fires and/or explosions. All-solid-state secondary batteries using a solid electrolyte instead of a liquid electrolyte have been proposed. The likelihood of ignition of solid electrolytes is lower than that of liquid electrolytes.

Since all-solid-state secondary batteries employ a solid electrolyte instead of a liquid electrolyte, the likelihood of fires or explosions may be reduced. All-solid-state secondary batteries may provide improved safety.

### Disclosure of Invention

### Technical Problem

An aspect is to provide an all-solid-state secondary battery including a new solid electrolyte layer to have improved charge and discharge characteristics.

### Solution to Problem

According to an embodiment, an all-solid-state secondary battery includes a cathode layer, an anode layer, and a solid electrolyte layer between the cathode layer and the anode layer,
wherein the anode layer includes an anode current collector and a first anode active material layer on one side of the anode current collector,
the solid electrolyte layer includes a sulfide-based solid electrolyte and an inorganic filler, and
the inorganic filler includes a lithium metal oxyhalide represented by Formula 1 below:

   Formula 1 LiₐM_{b}O_{c}Cl_{d}
wherein, in Formula 1, 0<a≤3, 0<b≤3, 0<c≤3, 0<d≤8, c<d, a/(a+b+c+d)<0.5, and M is a metal selected from Groups 3 to 15 of the Periodic Table of the Elements.

### Advantageous Effects of Invention

According to an aspect, there may be provided an all-solid-state secondary battery having improved safety and charge and discharge characteristics by including a solid electrolyte layer capable of preventing a short circuit at a high temperature and accommodating a volume change during charging and discharging.

### Brief Description of Drawings

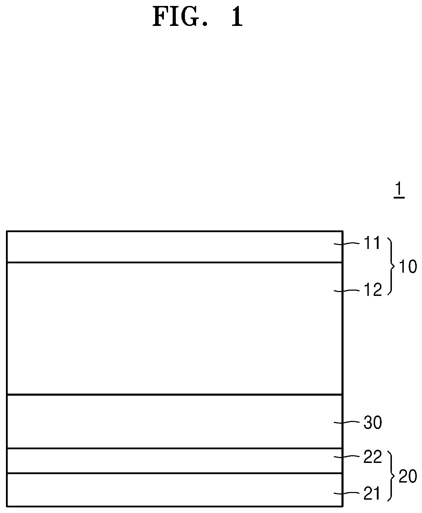

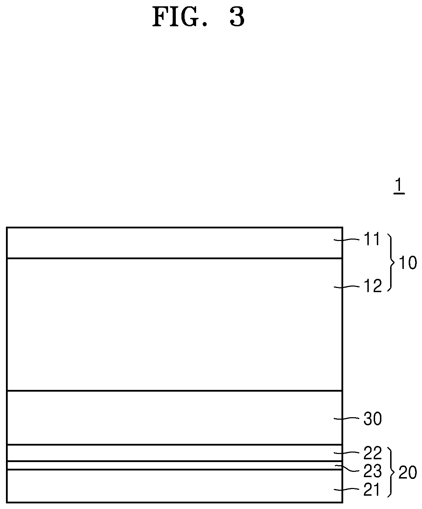

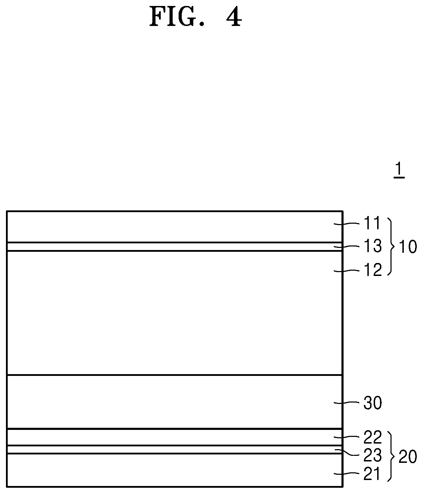

FIGS. 1 to 10 are cross-sectional views each illustrating an all-solid-state secondary battery according to an exemplary embodiment.

**[List of Reference Numerals for Major Elements]**

| | | | |
|---|---|---|---|
| 1: | all-solid-state secondary battery | 10: | cathode |
| 11: | cathode current collector | 12: | cathode active material layer |
| 13: | interlayer | 20: | anode |
| 21: | anode current collector | 22: | first anode active material layer |
| 23: | thin film | 24: | second anode active material layer |
| 30: | electrolyte layer | 50: | inactive member |

### Best Mode for Carrying out the Invention

Unless otherwise defined, all terms (including technical and scientific terms) used in the present disclosure have the same meaning as commonly understood by one of ordinary skill in the art to which the present disclosure belongs. In addition, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described in the present disclosure with reference to cross-sectional views which are schematic views of idealized embodiments. As such, variations from the shapes of the illustrations as a result, for example, of manufacturing techniques and/or tolerances, are to be expected. Thus, the embodiments described in the present disclosure should not be construed as limited to the particular shapes of regions illustrated in the present disclosure but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

The present inventive concept may, however, be embodied in different forms and should not be construed as limited to the embodiments described in the present disclosure. These embodiments are provided so that the present disclosure will be thorough and complete, and will fully convey the scope of the present inventive concept to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element is not interposed therebetween.

It will be understood that, although the terms "first," "second," and "third" may be used in the present disclosure to describe various elements, components, regions, layers, and/or sections, these elements, components, regions, layers, and/or sections should not be limited by these terms. These terms are only used to distinguish one element, component, region, layer, or section from another region, layer, or section. Thus, a first element, component, region, layer, or section described below may be termed a second element, component, region, layer, or section without departing from the teachings of the present disclosure.

The term used in the present disclosure is intended to describe only a specific embodiment and is not intended to limit the present inventive concept. As used herein, the singular forms "a," "an," and "the" are intended to include the plural forms, including "at least one," unless the content clearly indicates otherwise. "At least one" should not be construed as being limited to the singular. As used in the present disclosure, the term "and/or" includes any and all combinations of one or more of the associated listed items. The terms "includes," "including," "comprises," and/or "comprising," when used in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be used herein to easily describe one element or feature's relationship to another element or feature. It will be understood that the spatially relative terms are intended to encompass different orientations of a device in use or operation in addition to the orientation illustrated in the drawings. For example, when a device in the drawings is turned over, elements described as "below" or "beneath" other elements or features would then be "above" or "over" the other elements or features. Thus, the example term "below" may encompass both orientations of above and below. The device may be otherwise oriented (rotated 90 degrees or at other orientations), and the spatially relative terms used in the present disclosure may be interpreted accordingly.

"Group" refers to a group of the Periodic Table of the Elements according to the International Union of Pure and Applied Chemistry ("IUPAC") Groups 1-18 group classification system.

In the present disclosure, the term "particle diameter" refers to an average diameter when particles are spherical and refers to an average major axis length when particles are non-spherical. A particle diameter may be measured using a particle size analyzer (PSA). A "particle diameter" is, for example, an average particle diameter. An "average particle diameter" refers to, for example, a median particle diameter (D₅₀). D₅₀ refers to a particle size corresponding to a 50 % cumulative volume when a particle size distribution measured through a laser diffraction method is calculated from particles having a smaller particle size. D₉₀ refers to a particle size corresponding to a 90 % cumulative volume when a particle size distribution measured through a laser diffraction method is calculated from particles having a smaller particle size. D₁₀ refers to a particle size corresponding to a 10 % cumulative volume when a particle size distribution measured through a laser diffraction method is calculated from particles having a smaller particle size.

As used herein, the term "metal" includes all of metals and metalloids such as silicon and germanium in an elemental or ionic state, and as used herein, the term "alloy" refers to a mixture of two or more metals.

The term "electrode active material" as used herein refers to an electrode material that may undergo lithiation and delithiation.

As used herein, the term "cathode active material" refers to a cathode material that may undergo lithiation and delithiation, and as used herein, the term "anode active material" refers to an anode material that may undergo lithiation and delithiation.

As used herein, the terms "lithiate" and "lithiating" refer to a process of adding lithium to an electrode active material, and as used herein, the terms "delithiate" and "delithiating" refer to a process of removing lithium from an electrode active material.

As used herein, the terms "charge" and "charging" refer to a process of providing electrochemical energy to a battery, and as used herein, the terms "discharge" and "discharging" refer to a process of removing electrochemical energy from a battery.

As used herein, the terms "positive electrode" and "cathode" refer to an electrode at which electrochemical reduction and lithiation occur during a discharging process, and as used herein, the terms "negative electrode" and "anode" as used herein refer to an electrode at which electrochemical oxidation and delithiation occur during a discharging process.

As used herein, an aspect ratio represents a ratio L1/L2 of a major axis length L1 (for example, a length) to a minor axis length L2 (for example, a diameter). Here, the aspect ratio, the major axis length, the minor axis length, the length, and the diameter represent an average aspect ratio, an average major axis length, an average minor axis length, an average length, and an average diameter. The aspect ratio may be evaluated by using a scanning electron microscope.

In the present specification, a solid solution is distinguished from a mixture of two or more chemical species and refers to a homogeneous crystalline phase including two or more chemical species.

In the present specification, the term "two-dimensional carbon nanostructure" refers to a carbon nanostructure in which sizes in two dimensions are significantly greater than a size in the other dimension. That is, the two-dimensional carbon nanostructure is a carbon nanostructure in which an area defined by two dimensions is significantly greater than a thickness.

While specific embodiments have been described, alternatives, modifications, variations, improvements, and substantial equivalents that are or may be presently unforeseen may arise to applicants or others skilled in the art. Therefore, the appended claims as filed and as they may be amended are intended to embrace all such alternatives, modifications, variations, improvements, and substantial equivalents.

Hereinafter, an all-solid-state secondary battery according to exemplary embodiments will be described in more detail.

### [All-solid-state secondary battery]

An all-solid-state secondary battery according to an embodiment includes a cathode layer, an anode layer, and a solid electrolyte layer between the cathode layer and the anode layer, wherein the cathode layer includes a cathode current collector and a cathode active material layer on one side or both sides of the cathode current collector, the cathode active material layer includes a cathode active material and a first solid electrolyte, the solid electrolyte layer includes a sulfide-based solid electrolyte and an inorganic filler, the inorganic filler includes a lithium metal oxyhalide represented by Formula 1 below, and the anode layer includes an anode current collector and a first anode active material layer on one side of the anode current collector.

Formula 1 LiₐM_{b}O_{c}Cl_{d}

wherein, in Formula 1, 0<a≤3, 0<b≤3, 0<c≤3, 0<d≤8, c<d, a/(a+b+c+d)<0.5, and
M is a metal selected from Groups 3 to 15 of the Periodic Table of the Elements.

When lithium sulfide is used as a cathode active material, during charging and discharging, a volume of a cathode may contract or expand, and a volume of an anode may expand or contract. In a case in which there is no volume change in a solid electrolyte layer disposed between a cathode and an anode of which volume changes are large as described above, when non-uniform volume expansion occurs due to continuous charging and discharging, cracks may occur in the solid electrolyte layer, or resistance may increase due to interfacial delamination between the cathode and the solid electrolyte layer and/or between the anode and the solid electrolyte layer. As a result, the lifespan characteristics of an all-solid-state secondary battery may be degraded.

Accordingly, the present disclosure provides an all-solid-state secondary battery using a solid electrolyte layer that includes a sulfide-based solid electrolyte and an inorganic filler. The all-solid-state secondary battery includes the above-described solid electrolyte layer, and, in the solid electrolyte layer, the inorganic filler blocks interparticle pores of the sulfide-based solid electrolyte to control pinholes of the solid electrolyte layer. When the number of pinholes is reduced in this manner, cracks during charging and discharging may be reduced, and the solid electrolyte layer may effectively accommodate a volume change of the all-solid-state secondary battery during a charging and discharging process, thereby suppressing an increase in internal resistance of the all-solid-state secondary battery. As a result, the deterioration of the all-solid-state secondary battery may be prevented, and the charge and discharge characteristics and rate characteristics of the all-solid-state secondary battery may be improved.

Since the solid electrolyte layer has a low elastic modulus, the solid electrolyte layer may accommodate a volume change of the all-solid-state secondary battery during charging and discharging and may effectively prevent electrical disconnection and/or ionic disconnection inside the all-solid-state secondary battery despite a volume change of the all-solid-state secondary battery. An increase in internal resistance of the all-solid-state secondary battery during charging and discharging, for example, an increase in interfacial resistance between the solid electrolyte layer and a cathode layer and/or an anode layer, may be effectively suppressed. As a result, the deterioration of the all-solid-state secondary battery may be suppressed, and the charge and discharge characteristics thereof may be improved.

Since the solid electrolyte layer includes the inorganic filler, and the inorganic filler has ionic conductivity, the solid electrolyte layer has excellent flexibility and ionic conductivity. Since the solid electrolyte layer provides an excellent ion conduction network, an increase in internal resistance of the all-solid-state secondary battery may be effectively suppressed. As a result, the charge and discharge characteristics of the all-solid-state secondary battery may be improved.

The above-described solid electrolyte layer may be disposed between the cathode layer and the anode layer, thereby more effectively blocking the growth of lithium dendrites precipitated between the solid electrolyte layer and the cathode layer and/or the anode layer during a charging and discharging process of the all-solid-state secondary battery. Therefore, deterioration such as cracks of the solid electrolyte layer caused by the growth of lithium dendrites may be more effectively prevented. As a result, the charge and discharge characteristics of the all-solid-state secondary battery may be further improved.

Referring to FIGS. 1 to 10, an all-solid-state secondary battery 1 includes a cathode layer 10, an anode layer 20, and a solid electrolyte layer 30 between the cathode layer 10 and the anode layer 20. The cathode layer 10 includes a cathode current collector 11 and a cathode active material layer 12 on one side or both sides of the cathode current collector 11. The cathode active material layer 12 includes a cathode active material and a first solid electrolyte. The solid electrolyte layer 30 includes a sulfide-based solid electrolyte and an inorganic filler. The inorganic filler includes a lithium metal oxyhalide represented by Formula 1 below.

Formula 1 LiₐM_{b}O_{c}Cl_{d}

In Formula 1, 0<a≤3, 0<b≤3, 0<c≤3, 0<d≤8, c<d, a/(a+b+c+d)<0.5, and M is a metal selected from Groups 3 to 15 of the Periodic Table of the Elements.

The anode layer 20 includes an anode current collector 21 and a first anode active material layer 22 on one side of the anode current collector 21.

The solid electrolyte layer 30 has a solid state at room temperature. The solid electrolyte layer 30 includes the inorganic filler, and the inorganic filler is melted at a high temperature. The solid electrolyte layer is, for example, a flexible film. In this way, since the solid electrolyte layer is the flexible film, the solid electrolyte layer may effectively accommodate a volume change of the all-solid-state secondary battery 1 during charging and discharging of the all-solid-state secondary battery 1 and may more effectively suppress an increase in interfacial resistance inside the all-solid-state secondary battery 1.

### [Solid electrolyte layer]

### [Solid electrolyte layer: Inorganic filler]

Referring to FIGS. 1 to 10, the solid electrolyte layer 30 includes the inorganic filler.

The inorganic filler may be impregnated, for example, into pores of the sulfide-based solid electrolyte. A size of the inorganic filler may be controlled to be smaller than a size of the sulfide-based solid electrolyte. The size of the inorganic filler is selected, for example, in a range of 0.1 µm to 3 µm.

The size of the sulfide-based solid electrolyte is selected, for example, in a range of 0.1 µm to 3 µm. The sulfide-based solid electrolyte may contain a bimodal solid electrolyte. For example, the sulfide-based solid electrolyte may contain a small-particle-diameter first-sulfide-based solid electrolyte and a large-particle-diameter second-sulfide-based solid electrolyte.

An average particle diameter (D₅₀) of the small-particle-diameter first-sulfide-based solid electrolyte is in a range of 0.5 µm to 1.9 µm, and an average particle diameter (D₅₀) of a large-particle-diameter first-sulfide-based solid electrolyte is in a range of 2 µm to 5 µm. In this way, when the solid electrolyte layer is formed by using a bimodal sulfide-based solid electrolyte, the number of internal pores of the solid electrolyte layer may be reduced, and thus the density of the solid electrolyte layer may be increased. Therefore, by using such a solid electrolyte layer, an all-solid-state secondary battery with improved energy density, rate characteristics, and lifespan characteristics may be manufactured.

The inorganic filler may include, for example, an amorphous lithium metal oxyhalide. After a crystalline inorganic filler is prepared, the crystalline inorganic filler may be melted to prepare a molten salt, and then the molten salt may be cooled to prepare an amorphous inorganic filler. Alternatively, an amorphous inorganic filler may be directly prepared by adjusting a composition during the preparation of an inorganic filler. After a crystalline lithium metal oxyhalide is prepared, the crystalline lithium metal oxyhalide may be melted to prepare a molten salt, and then the molten salt may be cooled to prepare an amorphous lithium metal oxyhalide. Alternatively, an amorphous lithium metal oxyhalide may be directly prepared by adjusting a composition during the preparation of a lithium metal oxyhalide. The amorphous inorganic filler may have, for example, ductility. The amorphous inorganic filler may have ductility and thus may more effectively accommodate a volume change during charging and discharging of the all-solid-state secondary battery 1. On the other hand, the crystalline lithium metal oxyhalide may have relatively higher brittleness than the amorphous lithium metal oxyhalide. Whether the inorganic filler is amorphous may be confirmed by using an X-ray diffraction (XRD) spectrum.

The inorganic filler may be, for example, glassy. The inorganic filler may be, for example, a glassy lithium metal oxyhalide having a glass transition temperature (Tg). The glassy lithium metal oxyhalide may have ductility. The inorganic filler may have ductility and thus may effectively accommodate a volume change of the all-solid-state secondary battery 1 during charging and discharging or may easily deform according to a volume change of the all-solid-state secondary battery 1.

The glass transition temperature of the inorganic filler may be, for example, 20 °C or less, 10 °C or less, 0 °C or less, or -10 °C or less. The inorganic filler may have such a low glass transition temperature and thus may easily transition from a brittle crystalline metal salt state to a ductile glassy state. For example, the inorganic filler may be melted and then cooled and thus may be easily transitioned from a crystalline molten salt state to a glassy state. Alternatively, a glassy state may be obtained during a preparation process of the inorganic filler. The glass transition temperature may be measured, for example, by using a differential scanning calorimeter (DSC). The glass transition temperature may be measured, for example, by using a dynamic mechanical analyzer (DMA).

A melting point of the inorganic filler may be, for example, 100 °C or more, 105 °C or more, 110 °C or more, 115 °C or more, 120 °C or more, 125 °C or more, 130 °C or more, 135 °C or more, 140 °C or more, or 145 °C or more. The melting point of the inorganic filler may be, for example, 200 °C or less, 190 °C or less, 180 °C or less, 170 °C or less, 160 °C or less, or 150 °C or less. Since the inorganic filler has a melting point within such a range, the inorganic filler may be melted into a molten salt state and then cooled to easily prepare an amorphous inorganic filler. The melting point of the inorganic filler may be measured, for example, by using a DSC.

The inorganic filler may be an ion-conductive inorganic filler. The inorganic filler may have an ionic conductivity of, for example, 0.01 mS/cm or more, 0.05 mS/cm or more, 0.1 mS/cm or more, 0.3 mS/cm or more, 0.5 mS/cm or more, 0.7 mS/cm or more, or 1.0 mS/cm or more at a temperature of 25 °C and a pressure of 1 atm. The ionic conductivity may be measured through alternating current (AC) impedance analysis. An amplitude of a voltage used for AC impedance analysis may be in a range of 5 to 10 mV, and a frequency may be in a range of 1 MHz to 1 Hz. The inorganic filler has ionic conductivity, thereby effectively suppressing an increase in interfacial resistance between the sulfide-based solid electrolytes within the solid electrolyte layer.

An elastic modulus (or a Young's modulus) of the inorganic filler at a temperature of 30 °C may be 10 GPa or less, 5 GPa or less, 3 GPa or less, or 2 GPa or less. Since the inorganic filler has a low elastic modulus within such a range, the solid electrolyte layer including the inorganic filler may effectively accommodate a volume change of the all-solid-state secondary battery 1. Therefore, the cycle characteristics of the all-solid-state secondary battery 1 may be improved. The elastic modulus of the inorganic filler may be measured, for example, by using a DMA.

The elastic modulus of the inorganic filler may be smaller than, for example, an elastic modulus (or a Young's modulus) of the sulfide-based solid electrolyte. The elastic modulus of the sulfide-based solid electrolyte at a temperature of 30 °C may be, for example, in a range of 22 to 30 GPa. The elastic modulus of the inorganic filler may be, for example, 90 % or less, 50 % or less, 40 % or less, 30 % or less, 20 % or less, or 10 % or less of the elastic modulus of the sulfide-based solid electrolyte. An inorganic filler may be additionally disposed in the cathode active material layer 20. In the all-solid-state secondary battery 1, since the inorganic filler has a lower elastic modulus than the sulfide-based solid electrolyte, the inorganic filler may easily fill pores between the sulfide-based solid electrolytes and/or pores between the sulfide-based solid electrolyte and the cathode active material, thereby reducing internal resistance of the cathode active material layer 12 and easily accommodating a volume change of the cathode active material layer 12 during charging and discharging. As a result, the cycle characteristics of the all-solid-state secondary battery 1 may be further improved. The elastic modulus of the sulfide-based solid electrolyte may be measured, for example, by using a DMA.

The inorganic filler may have, for example, viscoelasticity. The inorganic filler may have, for example, viscoelastic creep. A viscoelastic creep rate of the inorganic filler may be, for example, 1×10⁻⁴ %/s or more, 2×10⁻⁴ %/s or more, or 4×10⁻⁴ %/s or more. %/s is a ratio of a deformed size to an initial size per unit time (second). Since the inorganic filler has viscoelasticity, the inorganic filler may easily accommodate a volume change of the all-solid-state secondary battery 1 during charging and discharging, and a shape thereof may be continuously deformed without defects. A creep rate is a rate of change over time of an inorganic filler under stress at a constant temperature, that is, a rate of deformation. The creep rate may be measured, for example, by using a universal test machine.

The inorganic filler includes a lithium metal oxyhalide represented by LiₐM_{b}O_{c}Cl_{d} (0<a≤3, 0<b≤3, 0<c≤3, 0<d≤8, c<d, a/(a+b+c+d)<0.5, and M is a metal selected from Groups 3 to 15 of the Periodic Table of the Elements). For example, in LiₐM_{b}O_{c}Cl_{d}, 0<a≤2, 0<b≤2.5, 0<c≤2.5, 0<d≤7, c<d, and a/(a+b+c+d)<0.5. For example, in LiₐM_{b}O_{c}Cl_{d}, 0<a≤1.5, 0<b≤3, 0<c≤2, 0<d≤6, c<d, and a/(a+b+c+d)<0.5. For example, in LiₐM_{b}O_{c}Cl_{d}, 0<a≤1, 0<b≤2.5, 0<c≤1.5, 0<d≤5, c<d, and a/(a+b+c+d)<0.5. For example, in LiₐM_{b}O_{c}Cl_{d}, 0<a≤1, 0<b≤2, 0<c≤1, 0<d≤4, c<d, and a/(a+b+c+d)<0.5.

The metal M of the lithium metal oxyhalide may include, for example, Fe, Ga, In, As, Sb, Mo, Bi, B, or a combination of two or more thereof.

The lithium metal oxyhalide may include, for example, LiAl_{b}O_{c}Cl_{d} (0<b≤3, 0<c≤2, 0<d≤4, c<d, and 1/(1+b+c+d)<0.5); LiFe_{b}O_{c}Cl_{d} (0<b≤3, 0<c≤2, 0<d≤4, c<d, and 1/(1+b+c+d)<0.5); LiGa_{b}O_{c}Cl_{d} (0<b≤3, 0<c≤2, 0<d≤4, c<d, and 1/(1+b+c+d)<0.5); LiIn_{b}O_{c}Cl_{d} (0<b≤3, 0<c≤2, 0<d≤4, c<d, and 1/(1+b+c+d)<0.5); LiAs_{b}O_{c}Cl_{d} (0<b≤3, 0<c≤2, 0<d≤4, c<d, and 1/(1+b+c+d)<0.5); LiSb_{b}O_{c}Cl_{d} (0<b≤3, 0<c≤2, 0<d≤4, c<d, and 1/(1+b+c+d)<0.5); LiMo_{b}O_{c}Cl_{d} (0<b≤3, 0<c≤2, 0<d≤4, c<d, and 1/(1+b+c+d)<0.5); LiBi_{b}O_{c}Cl_{d} (0<b≤3, 0<c≤2, 0<d≤4, c<d, and 1/(1+b+c+d)<0.5); LiB_{b}O_{c}Cl_{d} (0<b≤3, 0<c≤2, 0<d≤4, c<d, and 1/(1+b+c+d)<0.5); LiAl_{b-e}FeₑO_{c}Cl_{d} (0<b≤3, 0<c≤2, 0<d≤4, 0<e<b, c<d, and 1/(1+b+c+d+e)<0.5); LiAl_{b-e}GaₑO_{c}Cl_{d} (0<b≤3, 0<c≤2, 0<d≤4, 0<e<b, c<d, and 1/(1+b+c+d+e)<0.5); LiAl_{b-e}InₑO_{c}Cl_{d} (0<b≤3, 0<c≤2, 0<d≤4, 0<e<b, c<d, and 1/(1+b+c+d+e)<0.5); LiAl_{b-e}AsₑO_{c}Cl_{d} (0<b≤3, 0<c≤2, 0<d≤4, 0<e<b, c<d, and 1/(1+b+c+d+e)<0.5); LiAl_{b-e}SbₑO_{c}Cl_{d} (0<b≤3, 0<c≤2, 0<d≤4, 0<e<b, c<d, and 1/(1+b+c+d+e)<0.5); LiAl_{b-e}MoₑO_{c}Cl_{d} (0<b≤3, 0<c≤2, 0<d≤4, 0<e<b, c<d, and 1/(1+b+c+d+e)<0.5); LiAl_{b-e}BiₑO_{c}Cl_{d} (0<b≤3, 0<c≤2, 0<d≤4, 0<e<b, c<d, and 1/(1+b+c+d+e)<0.5); LiAl_{b-e}BₑO_{c}Cl_{d} (0<b≤3, 0<c≤2, 0<d≤4, 0<e<b, c<d, and 1/(1+b+c+d+e)<0.5), or a combination thereof.

The lithium metal oxyhalide may include, for example, LiAlₓO_{z}Cl_{w} (0<x≤2, 0<z≤1, 2<w<4, z<w, and 1/(1+x+z+w)<0.5), LiFeₓO_{z}Cl_{w} (0<x≤2, 0<z≤1, 2<w<4, z<w, and 1/(1+x+z+w)<0.5), LiGaₓO_{z}Cl_{w} (0<x≤2, 0<z≤1, 2<w<4, z<w, and 1/(1+x+z+w)<0.5), LiInₓO_{z}Cl_{w} (0<x≤2, 0<z≤1, 2<w<4, z<w, and 1/(1+x+z+w)<0.5), LiAsₓO_{z}Cl_{w} (0<x≤2, 0<z≤1, 2<w<4, z<w, and 1/(1+x+z+w)<0.5), LiSbₓO_{z}Cl_{w} (0<x≤2, 0<z≤1, 2<w<4, z<w, and 1/(1+x+z+w)<0.5), LiMoₓO_{z}Cl_{w} (0<x≤2, 0<z≤1, 2<w<4, z<w, and 1/(1+x+z+w)<0.5), LiBiₓO_{z}Cl_{w} (0<x≤2, 0<z≤1, 2<w<4, z<w, and 1/(1+x+z+w)<0.5), LiBₓO_{z}Cl_{w} (0<x≤2, 0<z≤1, 2<w<4, z<w, and 1/(1+x+z+w)<0.5), or a combination thereof.

The lithium metal oxyhalide may include, for example, LiAlₓFe_{y}O_{z}Cl_{w} (0<x≤2, 0≤y<1, 0<z≤1, 2<w<4, z<w, and 1/(1+x+y+z+w)<0.5), LiAlₓGa_{y}O_{z}Cl_{w} (0<x≤2, 0≤y<1, 0<z≤1, 2<w<4, z<w, and 1/(1+x+y+z+w)<0.5), LiAlₓIn_{y}O_{z}Cl_{w} (0<x≤2, 0≤y<1, 0<z≤1, 2<w<4, z<w, and 1/(1+x+y+z+w)<0.5), LiAlₓAs_{y}O_{z}Cl_{w} (0<x≤2, 0≤y<1, 0<z≤1, 2<w<4, z<w, and 1/(1+x+y+z+w)<0.5), LiAlₓSb_{y}O_{z}Cl_{w} (0<x≤2, 0≤y<1, 0<z≤1, 2<w<4, z<w, and 1/(1+x+y+z+w)<0.5), LiAlₓMo_{y}O_{z}Cl_{w} (0<x≤2, 0≤y<1, 0<z≤1, 2<w<4, z<w, and 1/(1+x+y+z+w)<0.5), LiAlₓBi_{y}O_{z}Cl_{w} (0<x≤2, 0≤y<1, 0<z≤1, 2<w<4, z<w, and 1/(1+x+y+z+w)<0.5), LiAlₓB_{y}O_{z}Cl_{w} (0<x≤2, 0≤y<1, 0<z≤1, 2<w<4, z<w, and 1/(1+x+y+z+w)<0.5), or a combination thereof.

A compound of Formula 1 is, for example, LiAlCl₂.₅O₀.₇₅, LiAl₁.₃Cl₂.₇O₁.1, LiAl₁.₂₅As₀.₀₉O₁.₁₈Cl₂.₆₆, LiGa₀.₄In₀.₇Sb₀.₀₄O₁.₀₅Cl₂.₃₂, LiAl₁.₂₅As₀.₀₉O₁.₁₈Cl₂.₆₆, or a combination thereof.

A content of the inorganic filler in the solid electrolyte layer is in a range of 1 to 15 parts by weight, 3 to 10 parts by weight, or 5 to 10 parts by weight with respect to 100 parts by weight of the total weight of the solid electrolyte layer. When the content of the inorganic filler is excessively low, the internal resistance of the solid electrolyte layer 30 may be excessively increased. When the content of the inorganic filler is excessively high, the shutdown effect of the solid electrolyte layer 30 may be reduced.

In the solid electrolyte layer according to an embodiment, the sulfide-based solid electrolyte includes a small-particle-diameter first-sulfide-based solid electrolyte having an average particle diameter (D₅₀) of 0.5 to 1.9 µm and a large-particle-diameter first-sulfide-based solid electrolyte having an average particle diameter (D₅₀) of 2 to 5 µm. In the present disclosure, an average particle diameter of the solid electrolyte may be measured, for example, by using a laser diffraction method. More specifically, after the cathode active material or the solid electrolyte is dispersed in a solution, the cathode active material or the solid electrolyte may be introduced into a commercially available laser diffraction particle size measuring device (for example, Microtrac MT 3000) and irradiated with ultrasonic waves at about 28 kHz and a power of 60 W, and then an average particle diameter (D₅₀) based on 50 % of a particle diameter distribution in the measuring device may be calculated.

A content of the small-particle-diameter first-sulfide-based solid electrolyte is greater than a content of a large-particle-diameter second-sulfide-based solid electrolyte. A mixing weight ratio of the small-particle-diameter first-sulfide-based solid electrolyte to the large-particle-diameter second-sulfide-based solid electrolyte is in a range of 1.5:1 to 7:1, 2:1 to 5:1, or 3:1 to 4:1. In this way, when the solid electrolyte layer is formed by using a bimodal sulfide-based solid electrolyte, the number of internal pores of the solid electrolyte layer may be reduced without a decrease in ionic conductivity of the solid electrolyte layer, thereby increasing the density of the solid electrolyte layer. Therefore, by using such a solid electrolyte layer, an all-solid-state secondary battery with improved energy density, rate characteristics, and lifespan characteristics may be manufactured.

A solid electrolyte layer of an all-solid-state secondary battery according to another embodiment may include a first solid electrolyte layer including a sulfide-based solid electrolyte and an inorganic filler, and a second solid electrolyte layer including a sulfide-based solid electrolyte and an inorganic filler. Here, the first solid electrolyte layer is disposed in contact with an anode, the second solid electrolyte layer is disposed in contact with a cathode, and a content of the inorganic filler in the first solid electrolyte layer is adjusted to be smaller than a content of the inorganic filler in the first solid electrolyte layer. When the inorganic filler in the solid electrolyte layer has the above-described content distribution, low-voltage characteristics are improved.

According to an embodiment, the content of the inorganic filler in the first solid electrolyte layer is 1 to 15 parts by weight or 1 to 5 parts by weight with respect to 100 parts by weight of the first solid electrolyte layer. According to an embodiment, the content of the inorganic filler in the second solid electrolyte layer is in a range of 1 to 15 parts by weight or 5 to 15 parts by weight with respect to 100 parts by weight of the second solid electrolyte layer.

### [Solid electrolyte layer: Solid electrolyte]

Referring to FIGS. 1 to 10, the all-solid-state secondary battery 1 includes the solid electrolyte layer 30 disposed between the cathode layer 10 and the anode layer 20 and including the sulfide-based solid electrolyte and the inorganic filler. The solid electrolyte layer 30 may further include, for example, a solid electrolyte or a combination of a solid electrolyte and a gel electrolyte.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. Regarding the sulfide-based solid electrolyte, The sulfide-based solid electrolyte may have an ionic conductivity of, for example, 1×10-5 S/cm or more at room temperature. The sulfide-based solid electrolyte may include, for example, at least one selected from Li₃PO₄-Li₂SO₄, Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number and Z is one of Ge, Zn, and Ga), Li₂S-GeS₂, Li₂S-SiS₂-Li₃PO₄, Li₂S-SiS₂-LiₚMO_{q} (p and q are each a positive number and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The oxide-based solid electrolyte may include, for example, Li, O, and a transition metal element and may optionally further include other elements. For example, the oxide-based solid electrolyte may be a solid electrolyte having an ionic conductivity of 1×10-5 S/cm or more at room temperature. The oxide-based solid electrolyte may be selected from oxide-based solid electrolytes used in a solid electrolyte layer. The solid electrolyte may be, for example, a mixture of a sulfide-based solid electrolyte and a lithium salt. For example, the solid electrolyte may be a mixture of Li₃PO₄-Li₂SO₄ and a binary lithium salt or a mixture of Li₃PO₄-Li₂SO₄ and a ternary lithium salt.

The oxide sulfide-based solid electrolyte may be, for example, Li_{1+x+y}AlₓTi₂₋ₓSi_{y}P_{3-y}O₁₂ (0<x<2 and 0≤y<3), BaTiO₃, Pb(Zr,Ti)O₃(PZT), Pb₁₋ₓLaₓZr_{1-y} Ti_{y}O₃(PLZT) (0≤x<1 and 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M=Te, Nb, or Zr and 0≤x≤10), or a combination thereof. The oxide-based solid electrolyte is prepared, for example, through sintering or the like.

The oxide-based solid electrolyte is, for example, a garnet-type solid electrode selected from Li₇La₃Zr₂O₁₂ (LLZO) and Li₃₊ₓLa₃Zr₂₋ₐMₐO₁₂ (LLZO doped with M) (M=Ga, W, Nb, Ta, or Al, 0<a<2, and 0≤x≤10).

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of 25 °C and a pressure of 1 atm. The polymer solid electrolyte may not include, for example, a liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP), PEO, a poly(styrene-b-ethylene oxide) block copolymer (PS-PEO), poly(styrene-butadiene), poly(styreneisoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), PAN, polyaniline, poly acetylene, NAFION^{™}, AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof, but one or more embodiments are not limited thereto. Any material may be used as long as the material is used in a polymer electrolyte in the art. As the lithium salt, any material may be used as long as the material may be used as a lithium salt in the art. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each a natural number from 1 to 20), LiCl, LiI, or a mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte is, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of 25 °C and a pressure of 1 atm. The polymer gel electrolyte may have, for example, a gel state without including a liquid. The liquid electrolyte used in the polymer gel electrolyte may include, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in a solid polymer electrolyte. The organic solvent may be selected from organic solvents used in a liquid electrolyte. The organic solvent is, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof. The lithium salt may be selected from lithium salts used in a polymer solid electrolyte. The ionic liquid refers to a salt in a liquid state at room temperature or a room-temperature molten salt that has a melting point at room temperature or less and consists of only ions. The ionic liquid may include, for example, at least one of compounds including a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazol-based cation, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. The polymer solid electrolyte may be impregnated, for example, with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

### [Solid electrolyte layer: Binder]

The solid electrolyte layer 30 may include, for example, a binder. The binder included in the solid electrolyte layer 30 may include, for example, styrene-butadiene rubber (SBR), PTFE, PVDF, polyethylene, or the like, but one or more embodiments are not limited thereto. Any material may be used as long as the material is used as a binder in the art. The binder of the solid electrolyte layer 30 may be identical to or different from a binder included in the cathode active material layer 12 and the anode active material layer 22. The binder may be omitted.

A content of the binder included in the solid electrolyte layer 30 is in a range of 0.1 to 10 wt%, 0.1 to 5 wt%, 0.1 to 3 wt%, 0.1 to 1 wt%, 0 to 0.5 wt%, or 0 to 0.1 wt% with respect to the total weight of the solid electrolyte layer 30.

In order to form the solid electrolyte layer according to an embodiment, a composition for forming a solid electrolyte layer is prepared by mixing a sulfide-based solid electrolyte, an inorganic filler, and a binder. The composition for forming a solid electrolyte layer may be provided on a substrate and may be heat-treated to form the solid electrolyte layer.

The heat treatment may be performed at a temperature of 50 °C to 200 °C, 100 °C to 180 °C, 110 °C to 170 °C, or 110 °C to 150 °C. Through such a heat treatment process, voids or the like in the solid electrolyte layer may be removed.

After the solid electrolyte layer is disposed between the cathode and the anode, a battery assembly may be obtained and pressed.

The pressing may be, for example, roll pressing, flat pressing, or the like but is not necessarily limited to such a method. Any pressing may be used as long as the pressing may be used in the art. The pressing may be omitted.

The pressing is performed, for example, at a temperature ranging from room temperature (20 °C to 25 °C) to 90 °C. Alternatively, the pressing is performed at a high temperature of 100 °C or more. A time for which the pressing is performed is, for example, 30 minutes or less, 20 minutes or less, 15 minutes or less, or 10 minutes or less. The time for which the pressing is performed is in a range of 1 ms to 30 minutes, 1 ms to 20 minutes, 1 ms to 15 minutes, or 1 ms to 10 minutes. A pressing method includes, for example, isotactic pressing, roll pressing, flat pressing, or the like but is not necessarily limited to such a method. Any pressing may be used as long as the pressing is used in the art. A pressure applied during the pressing is, for example, 500 MPa or less, for example, 400 MPa or less, 300 MPa or less, 200 MPa or less, 100 MPa or less, or 50 MPa. The pressure applied during the pressing is, for example, in a range of 1 to 50 MPa, 1 to 30 MPa, 1 MPa to 20 MPa, or 1 to 10 MPa. Through such pressing, for example, a solid electrolyte powder may be sintered to form a single solid electrolyte.

In the pressing, plate pressing is performed, for example, at a temperature of 40 to 100 °C, for example, at a temperature of 85 °C and a pressure of 500 MPa for 30 min. Through such pressing, the solid electrolyte layer is sintered to improve battery characteristics.

### [Cathode layer]

Referring to FIGS. 1 to 10, the cathode 10 includes the cathode current collector 11 and the cathode active material layer 12 disposed on one side or both sides of the cathode current collector 11. The cathode active material layer 12 includes the cathode active material and the first solid electrolyte.

### [Cathode active material layer: Cathode active material]

A content of the cathode active material included in the cathode active material layer 12 may be, for example, in a range of 10 wt% to 99 wt%, 50 wt% to 99 wt%, 70 wt% to 95 wt%, or 80 wt% to 95 wt% of the total weight of the cathode active material layer 12. When the content of the cathode active material excessively decreases, the energy density of the all-solid-state secondary battery 1 decreases. When the content of the cathode active material excessively increases, the deterioration of the all-solid-state secondary battery 1 may be accelerated due to a volume change of a cathode during charging and discharging.

The cathode active material included in the cathode active material layer 12 is a cathode active material capable of reversibly absorbing and desorbing lithium ions.

The cathode active material includes, for example, an oxide-based cathode active material, a sulfide-based cathode active material, or a combination thereof.

The oxide-based cathode active material includes, for example, a lithium transition metal oxide, a metal oxide, or a combination thereof. The lithium transition metal oxide includes, for example, lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof. The metal oxide includes, for example, iron oxide, vanadium oxide, or a combination thereof.

The sulfide-based cathode active material includes, for example, nickel sulfide, copper sulfide, Li₂S, a Li₂S-containing composite, or a combination thereof.

The oxide-based cathode active material may include, for example, at least one composite oxide of lithium and a metal selected from cobalt, manganese, nickel, and a combination thereof. A lithium-containing oxide-based cathode active material may include, for example, a compound represented by at least one of formulas of LiₐA_{1-b}B'_{b}D₂ (0.90≤a≤1 and 0≤b≤0.5); LiₐE_{1-b}B'_{b}O_{2-c}D_{c} (0.90≤a≤1, 0≤b≤0.5, and 0≤c≤0.0); LiE_{2-b}B'_{b}O_{4-c}D_{c} (0≤b≤0.5 and 0≤c≤0.05); LiₐNi_{1-b-c}Co_{b}B'_{c}D_{α} (0.90≤a≤1, 0≤b≤0.5, 0≤c≤0.05, and 0<α≤2); LiₐNi_{1-b-c}Co_{b}B'_{c}O_{2-α}F'_{α} (0.90≤a≤1, 0≤b≤0.5, 0≤c≤0.05, and 0<α<2); LiₐNi_{1-b-c}Co_{b}B'_{c}O_{2-α}F'_{α} (0.90≤a≤1, 0≤b≤0.5, 0≤c≤0.05, and 0<α<2); LiₐNi_{1-b-c}Mn_{b}B'_{c}D_{α} (0.90≤a≤1, 0≤b≤0.5, 0≤c≤0.05, and 0<α≤2); LiₐNi_{1-b-c}Mn_{b}B'_{c}O_{2-α}F'_{α} (0.90≤a≤1, 0≤b≤0.5, 0≤c≤0.05, and 0<α<2); LiₐNi_{1-b-c}Mn_{b}B'_{c}O_{2-α}F'_{α} (0.90≤a≤1, 0≤b≤0.5, 0≤c≤0.05, and 0<α<2); LiₐNi_{b}E_{c}G_{d}O₂ (0.90≤a≤1, 0≤b≤0.9, 0≤c≤0.5, and 0.001≤d≤0.1); LiₐNi_{b}Co_{c}Mn_{d}GₑO₂ (0.90≤a≤1, 0≤b≤0.9, 0≤c≤0.5, 0≤d≤0.5, and 0.001≤e≤0.1); LiₐNiG_{b}O₂ (0.90≤a≤1 and 0.001≤b≤0.1); LiₐCoG_{b}O₂ (0.90≤a≤1 and 0.001≤b≤0.1); LiₐMnG_{b}O₂ (0.90≤a≤1 and 0.001≤b≤0.1); LiₐMn₂G_{b}O₄ (0.90≤a≤1 and 0.001≤b≤0.1); LiV₂O₅; LiI'O₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulas representing the above-described compounds, A is Ni, Co, Mn, or a combination thereof, B' is Al, Ni, Co, Mn, Cr, Fe, Mg, Sr, V, a rare earth element, or a combination thereof, D is O, F, S, P, or a combination thereof, E is Co, Mn, or a combination thereof, F' is F, S, P, or a combination thereof, G is Al, Cr, Mn, Fe, Mg, La, Ce, Sr, V, or a combination thereof, Q is Ti, Mo, Mn, or a combination thereof, I' is Cr, V, Fe, Sc, Y, or a combination thereof, and J is V, Cr, Mn, Co, Ni, Cu, or a combination thereof. A compound in which a coating layer is added to a surface of the above-described compound may also be used, and a mixture of the above-described compound and a compound to which a coating layer is added may also be used. The coating layer added to the surface of the above-described compound includes, for example, a coating element compound of an oxide or a hydroxide of a coating element, an oxyhydroxide of a coating element, an oxycarbonate of a coating element, or a hydroxycarbonate of a coating element. A compound constituting the coating layer is amorphous or crystalline. The coating element included in the coating layer is Mg, Al, Co, K, Na, Ca, Si, Ti, V, Sn, Ge, Ga, B, As, Zr, or a mixture thereof. A method of forming the coating layer is selected within a range that does not adversely affect the physical properties of a cathode active material. A coating method includes, for example, spray coating, dipping, or the like. A specific coating method may be well understood by those skilled in the art, and thus a detailed description thereof will be omitted.

The oxide-based cathode active material may include, for example, lithium transition metal oxides represented by Formulas 2 to 9 below:

Formula 2 LiₐNiₓCo_{y}M_{z}O_{2-b}A_{b}
wherein, in Formula 2, 10≤a≤1.2, 0≤b≤0.2, 0.8≤x<1, 0≤y≤0.3, 0<z≤0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

   Formula 3 LiNiₓCo_{y}Mn_{z}O_{2,}

   Formula 4 LiNiₓCo_{y}Al_{z}O₂
wherein, in Formulas 3 and 4, 0.8≤x≤0.95, 0≤y≤0.2, 0<z≤0.2, and x+y+z=1,

   Formula 5 LiNiₓCo_{y}Mn_{z}Al_{w}O₂
wherein, in Formula 5, 0.8≤x≤0.95, 0≤y≤0.2, 0<z≤0.2, 0<w≤0.2, and x+y+z+w=1,

   Formula 6 LiₐCoₓM_{y}O_{2-b}A_{b}
wherein, in Formula 6, 1.0≤a≤1.2, 0≤b≤0.2, 0.9≤x≤1, 0≤y≤0.1, x+y=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof,

   Formula 7 LiₐNiₓMn_{y}M'_{z}O_{2-b}A_{b}
wherein, in Formula 7, 1.0≤a≤1.2, 0≤b≤0.2, 0<x≤0.3, 0.5≤y<1, 0<z≤0.3, x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof,

   Formula 8 LiₐM1ₓM2_{y}PO_{4-b}X_{b}
wherein, in Formula 8, 0.90≤a≤1.1, 0≤x≤0.9, 0≤y≤0.5, 0.9<x+y<1.1, 0≤b≤2, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof, and

   Formula 9 LiₐM3_{z}PO₄
wherein, in Formula 9, 0.90≤a≤1.1, 0.9≤z≤1.1, and M3 may be chromium (Cr), manganese (Mn), iron (Fe), cobalt (Co), nickel (Ni), copper (Cu), zirconium (Zr), or a combination thereof.

The oxide-based cathode active material may be covered with a coating layer. As the coating layer, any coating layer is used as long as the coating layer is known as a coating layer of a cathode active material of an all-solid-state secondary battery. The coating layer includes, for example, Li₂O-ZrO₂ (LZO) or the like.

A size of the oxide-based cathode active material may be, for example, in a range of 0.1 to 30 µm, 0.5 to 20 µm, or 1 to about 15 µm. The oxide-based cathode active material may include, for example, single crystal particles or polycrystal particles.

The sulfide-based cathode active material may include, for example, a Li₂S-containing composite. The Li₂S-containing composite includes, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon includes carbon. As carbon, for example, any material may be used as long as the material is a material including carbon atoms and is used as a conductive material in the art. Carbon may be, for example, crystalline carbon, amorphous carbon, or a combination thereof. Carbon may be, for example, a calcined material of a carbon precursor. Carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, graphene oxide (GO), reduced graphene oxide (rGO), graphene balls (GBs), or a combination thereof. Carbon may be, for example, porous carbon or nonporous carbon. The porous carbon may include, for example, periodic and regular two-dimensional or three-dimensional pores. The porous carbon may be, for example, carbon black such as Ketjen black, acetylene black, Denka black, thermal black, or channel black; graphite; activated carbon; or a combination thereof. The form of carbon may be, for example, a particle form, a sheet form, a fibrous form, or the like, but one or more embodiments are not limited thereto. Any material may be used as long as the material is used as carbon in the art. A method of preparing the composite of Li₂S and carbon may be a dry method, a wet method, or a combination thereof but is not limited thereto. In the art, the method of preparing the composite of Li₂S and carbon may include, for example, milling, heat treatment, deposition, or the like, but one or more embodiments are not necessarily limited thereto. Any method may be used as long as the method is used in the art.

The composite of Li₂S, carbon, and a solid electrolyte includes carbon and a solid electrolyte. Carbon is defined as for the above-described composite of Li₂S and carbon. The solid electrolyte may be, for example, an amorphous solid electrolyte, and any material may be used as long as the material is used as an ion-conductive material in the art. The solid electrolyte is, for example, an inorganic solid electrolyte. The solid electrolyte is, for example, a crystalline solid electrolyte, an amorphous solid electrolyte, or a combination thereof. The solid electrolyte is, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes used in a solid electrolyte layer. The sulfide-based solid electrolyte and the oxide-based solid electrolyte are defined as for the above-described sulfide-based solid electrolyte and oxide-based solid electrolyte of the solid electrolyte layer.

The composite of Li₂S and a solid electrolyte includes a solid electrolyte. The solid electrolyte is defined as for the above-described composite of Li₂S, carbon, and a solid electrolyte.

The composite of Li₂S and a lithium salt includes a lithium salt compound. The lithium salt compound does not include, for example, a sulfur (S) atom. The lithium salt compound may be, for example, a binary compound including lithium and one type of element selected from Groups 13 to 17 of the Periodic Table of the Elements. The binary compound may include, for example, at least one selected from LiF, LiCl, LiBr, LiI, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound including lithium and two types of elements selected from Groups 13 to 17 of the Periodic Table of the Elements. The ternary compound includes, for example, at least one selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound is, for example, at least one lithium halide compound selected from LiF, LiCl, LiBr, and LiI. The composite of Li₂S and a solid electrolyte includes a solid electrolyte. The solid electrolyte is defined as for the above-described solid electrolyte used in the composite of Li₂S, carbon, and a solid electrolyte. The composite of Li₂S and a solid electrolyte includes, for example, a composite of Li₂S and at least one lithium salt selected from LiF, LiCl, LiBr, LiI, LiH, Li₂S, Li₂O, Li₂Se, Li₂Te, Li₃N, Li₃P, Li₃As, Li₃Sb, LiI₃, and LiB₃.

The composite of Li₂S, a lithium salt, and carbon includes a lithium salt compound and carbon. Carbon is defined as for the above-described composite of Li₂S and carbon.

The composite of Li₂S and a metal carbide includes a metal carbide. The metal carbide is, for example, a two-dimensional metal carbide. The two-dimensional metal carbide is, for example, MXene. The two-dimensional metal carbide is represented, for example, by Mₙ₊₁CₙTₓ (M is a transition metal, T is a terminal group, T is O, OH, and/or F, n=1, 2, or 3, and x is the number of terminal groups). The two-dimensional metal carbide is, for example, Ti₂CTₓ, (Ti₀.5, Nb₀.₅)₂CTₓ, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or a combination thereof. A surface of the two-dimensional metal carbide is terminated with O, OH, and/or F.

The composite of Li₂S, carbon, and a metal carbide includes carbon and a metal carbide. Carbon is defined as for the above-described composite of Li₂S and carbon. The metal carbide is defined as for the above-described composite of Li₂S and a metal carbide.

The composite of Li₂S and a metal nitride includes a metal nitride. The metal nitride is, for example, a two-dimensional metal nitride. The two-dimensional metal nitride is represented, for example, by Mₙ₊₁NₙTₓ (M is a transition metal, T is a terminal group, T is O, OH, and/or F, n=1, 2, or 3, and x is the number of terminal groups). A surface of the two-dimensional metal nitride is terminated with O, OH, and/or F.

The composite of Li₂S, carbon, and a metal nitride includes carbon and a metal nitride. Carbon is defined as for the above-described composite of Li₂S and carbon. The metal nitride is defined as for the above-described composite of Li₂S and a metal nitride.

The Li₂S-containing composite may further include, for example, a second fibrous sulfide-based solid electrolyte (not shown). The Li₂S-containing composite may be a composite of Li₂S and a second fibrous sulfide-based solid electrolyte or a composite of Li₂S, a second fibrous sulfide-based solid electrolyte, and the above-described carbon, solid electrolyte, lithium salt, metal carbide, or metal nitride.

Since the Li₂S-containing composite includes the second fibrous sulfide-based solid electrolyte, the deterioration of a lithium battery may be further suppressed, and the cycle characteristics of the lithium battery may be further improved. A size of the second fibrous sulfide-based solid electrolyte may be smaller than a size of a first fibrous sulfide-based solid electrolyte 100. A length and/or thickness of the second fibrous sulfide-based solid electrolyte may be 50 % or less, 40 % or less, 30 % or less, 20 % or less, or 10 % of a length and/or thickness of the first fibrous sulfide-based solid electrolyte 100, respectively. The length and/or thickness of the second fibrous sulfide-based solid electrolyte may be in a range of 0.1 to 50 %, 0.5 to 40 %, 1 to 30 %, 1 to 20 %, or 1 to 10 % of the length and/or thickness of the first fibrous sulfide-based solid electrolyte 100, respectively. For example, the second fibrous sulfide-based solid electrolyte may have the same shape as the first fibrous sulfide-based solid electrolyte 100 and may have a smaller size than the first fibrous sulfide-based solid electrolyte. The second fibrous sulfide-based solid electrolyte may have such a reduced length and/or thickness and thus may be easily distributed in the Li₂S-containing composite. The second fibrous sulfide-based solid electrolyte may have such a reduced length and/or thickness so that the deterioration of a lithium battery may be further suppressed, and the cycle characteristics of the lithium battery may be further improved.

A size of the sulfide-based cathode active material may be, for example, in a range of 0.1 to 50 µm, 0.5 to 30 µm, 0.5 to 20 µm, or 1 to 10 µm. A size of Li₂S may be, for example, in a range of 1 nm to 10 µm, 10 nm to 5 µm, 10 nm to 3 µm, or 10 nm to 1 µm. A size of the Li₂S-containing composite may be, for example, in a range of 0.1 to 50 µm, 0.5 to 30 µm, 0.5 to 20 µm, or 1 to 10 µm.

The cathode active material may have, for example, a particulate shape such as a spherical shape or an oval shape. A particle diameter of the cathode active material is not particularly limited and is in a range applicable to a cathode active material of an all-solid-state secondary battery according to a related art.

The cathode active material may include, for example, a composite cathode active material. The composite cathode active material may include, for example, a core including a lithium transition metal oxide, and a shell disposed along a surface of the core. The shell may include an inorganic filler. The inorganic filler includes the lithium metal oxyhalide represented by Formula 1.

In the composite cathode active material, a portion or all of the core may be coated with a shell including an inorganic filler. In the composite cathode active material, an inorganic filler may be disposed on a portion or all of a lithium transition metal oxide core, thereby suppressing an increase in interfacial resistance between the composite cathode active material and the first solid electrolyte. As a result, the internal resistance of the all-solid-state secondary battery 1 may be reduced, and the cycle characteristics of the all-solid-state secondary battery 1 may be improved.

A content of the inorganic filler in the composite cathode active material may be in a range of 0.1 to 20 parts by weight, 0.1 to 10 parts by weight, or 0.1 to 5 parts by weight with respect to 100 parts by weight of the core. Since the composite cathode active material has a content of the inorganic filler within such a range, a portion or all of the surface of the core may be coated with the inorganic filler. When the content of the inorganic filler applied onto the core is excessively low, a coating effect may be insignificant. When the content of the inorganic filler applied onto the core is excessive, the energy density of the cathode active material layer 12 may be reduced.

The cathode active material layer may include and contain a lithium sulfide-based cathode active material and an inorganic filler, and the inorganic filler may contain a lithium metal oxyhalide represented by Formula 1 below.

Formula 1 LiₐM_{b}O_{c}Cl_{d}
In Formula 1, 0<a≤3, 0<b≤3, 0<c≤3, 0<d≤8, c<d, a/(a+b+c+d)<0.5, and
M is a metal selected from Groups 3 to 15 of the Periodic Table of the Elements.

A cathode contains the above-described inorganic filler, and thus an increase in interfacial resistance between components constituting a composite cathode active material is suppressed, thereby improving the charge and discharge characteristics of an all-solid-state secondary battery. The inorganic filler may have elasticity. The inorganic filler has elasticity, thereby more effectively accommodating a volume change of the cathode active material layer containing the composite cathode active material. Since the inorganic filler is easily formed into various shapes, the inorganic filler may easily fill pores formed in the cathode active material layer. An increase in internal resistance due to pores in the cathode active material layer containing the composite cathode active material may be suppressed, thereby suppressing an increase in internal resistance of an all-solid-state secondary battery. As a result, the charge and discharge characteristics of the all-solid-state secondary battery may be improved.

The cathode active material layer may include the inorganic filler, thereby providing improved durability against a potential change, a temperature change, or the like occurring during a charging and discharging process, as compared to a cathode active material layer including an organic filler. As compared to an organic filler, the deterioration of the inorganic filler may be suppressed during a charging and discharging process of an all-solid-state secondary battery. As a result, the charge and discharge characteristics of the all-solid-state secondary battery may be improved.

When a cathode active material layer containing an inorganic filler is applied, electron and ion networks between a lithium sulfide-based cathode active material and a solid electrolyte are strengthened, thereby improving capacity and a lifespan, enabling low-pressure driving, and suppressing high-voltage side reactions of a cathode. In an all-solid-state secondary battery employing such a cathode active material layer, a capacity reduction may be decreased, for example, at a voltage of 1.5 V or more or 1.0 V to 1.5 V, thereby improving specific capacity and initial efficiency. In particular, due to impregnation characteristics with an argyrodite solid electrolyte layer, dendrite formation at high power may be reduced, and a crack phenomenon of the cathode active material layer may be reduced, thereby improving the lifespan characteristics of the all-solid-state secondary battery. In addition, in configuring a cathode with a thick film thickness for implementing high energy density, the degradation of rate characteristics is improved, thereby reducing the occurrence of a short circuit during rapid charging and reducing a short circuit phenomenon due to a reduction in the number of pinholes in a solid electrolyte layer. Therefore, since a proportion of an elastic sheet is reduced, battery fastening pressure may be lowered to 2.5 MPa or less, 2 MPa or less, 0.1 to 2 MPa, or 0.15 to 1 MPa, thereby implementing a free-standing cell.

### [Cathode active material layer: First solid electrolyte]

Referring to FIGS. 1 to 10, the cathode active material layer 12 includes the first solid electrolyte. The first solid electrolyte included in the cathode active material layer 12 may be identical to or different from the solid electrolyte included in the solid electrolyte layer 30.

The first solid electrolyte included in the cathode active material layer 12 may have a D₅₀ average particle diameter that is smaller than that of the solid electrolyte included in the solid electrolyte layer 30. For example, the D₅₀ average particle diameter of the first solid electrolyte included in the cathode active material layer 12 may be 90 % or less, 80 % or less, 70 % or less, 60 % or less, 50 % or less, 40 % or less, 30 % or less, or 20 % or less of the D₅₀ average particle diameter of the solid electrolyte included in the solid electrolyte layer 30. The D₅₀ average particle diameter is, for example, a median particle diameter (D₅₀). The median particle diameter (D₅₀) is a particle size corresponding to a 50 % cumulative volume when a particle size distribution measured through a laser diffraction method is calculated from particles having a smaller particle size.

A content of the first solid electrolyte included in the cathode active material layer 12 may be, for example, in a range of 1 wt% to 40 wt%, 1 wt% to 30 wt%, 1 wt% to 20 wt%, or 1 wt% to 10 wt% of the total weight of the cathode active material layer 12.

The first solid electrolyte may be, for example, a sulfide-based solid electrolyte. The sulfide-based solid electrolyte includes, for example, at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number and Z is one of Ge, Zn, and Ga), Li₂S-GeS₂, Li₂S-SiS₂-Li₃PO₄, Li₂S-SiS₂-LiₚMO_{q} (p and q are each a positive number and M is one of P, Si, Ge, B, Al, Ga, and In) Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). For example, the sulfide-based solid electrolyte is prepared by treating a starting material such as Li₂S or P₂S₅ through melt quenching or mechanical milling. In addition, after such treating, heat treatment may be performed. A solid electrolyte may be in an amorphous state, a crystalline state, or a mixture state thereof. In addition, the solid electrolyte may be, for example, a material that includes at least sulfur (S), phosphorus (P), and lithium (Li) as constituent elements among the above-described materials of the sulfide-based solid electrolyte. For example, the solid electrolyte may be a material including Li₂S-P₂S₅. When a material including Li₂S-P₂S₅ is used as a sulfide-based solid electrolyte material for forming a solid electrolyte, a mixing molar ratio of Li₂S to P₂S₅, for example, Li₂S:P₂S₅, is in a range of 20:80 to 90:10, 25:75 to 90:10, 30:70 to 70:30, or 40:60 to 60:40.

The sulfide-based solid electrolyte may include, for example, an argyrodite-type solid electrolyte represented by Formula 10 below:

Formula 10 Li⁺₁₂₋ₙ₋ₓAⁿ⁺X²⁻₆₋ₓY⁻_{x.}

wherein, in Formula 10, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The sulfide-based solid electrolyte may be, for example, an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The sulfide-based solid electrolyte may be, for example, an argyrodite-type compound including at least one selected from Li₆PS₅Cl, Li₆PS₅Br, and Li₆PS₅I.

The argyrodite-type solid electrolyte may have a density of 1.5 to 2.0 g/cc. The argyrodite-type solid electrolyte may have a density of 1.5 g/cc or more so that the internal resistance of an all-solid-state secondary battery may be reduced, and Li may be effectively suppressed from penetrating the solid electrolyte layer.

### [Cathode active material layer: Inorganic filler]

Referring to FIGS. 1 to 10, the cathode active material layer 12 may further include an inorganic filler. The inorganic filler includes a lithium metal oxyhalide represented by Formula 1 below.

Formula 1 LiₐM_{b}O_{c}Cl_{d}

In Formula 1, 0<a≤3, 0<b≤3, 0<c≤3, 0<d≤8, c<d, a/(a+b+c+d)<0.5, and M is a metal selected from Groups 3 to 15 of the Periodic Table of the Elements.

A content of the inorganic filler included in the cathode active material layer 12 may be, for example, in a range of 0.1 to 20 wt%, 0.1 to 10 wt%, or 0.1 to 5 wt% of the total weight of the cathode active material layer 12.

The inorganic filler included in the cathode active material layer 12 may be selected from inorganic fillers used in the solid electrolyte layer 30. The inorganic filler is defined as for the above-described solid electrolyte layer 30.

A weight ratio of the first solid electrolyte to the inorganic filler in the cathode active material layer 12 may be, for example, in a range of 99:1 to 1:99, 90:1 to 10:90, 80:20 to 20:80, 70:30 to 30:70, or 60:40 to 40:60. Since the first solid electrolyte and the inorganic filler have a weight ratio within such a range, the all-solid-state secondary battery 1 may provide excellent cycle characteristics.

In the cathode active material layer 12, the content of the inorganic filler may be smaller than, for example, the content of the first solid electrolyte. The weight ratio of the first solid electrolyte to the inorganic filler in the cathode active material layer 12 may be in a range of 99:1 to 50:50, 99:1 to 60:40, 99:1 to 70:30, 99:1 to 80:20, or 99:1 to 90:10. Since the first solid electrolyte and the inorganic filler have a weight ratio within such a range, a volume change of the cathode active material layer 12 during charging and discharging may be more easily accommodated. As a result, the cycle characteristics of the all-solid-state secondary battery 1 may be further improved.

### [Cathode active material layer: Conductive material]

The cathode active material layer 12 may further include a conductive material. The conductive material may be, for example, a carbon-based material, a metal-based material, or a combination thereof.

A content of the conductive material included in the cathode active material layer 12 may be, for example, in a range of 1 wt% to 30 wt%, 1 wt% to 20 wt%, or 1 wt% to 10 wt% of the total weight of the cathode active material layer 12.

The metal-based material may be a metal powder, a metal fiber, or a combination thereof but is not limited thereto. Any metal-based material may be used as long as the metal-based material is used as a conductive material in the art.

The carbon-based material may include, for example, amorphous carbon. Since the carbon-based material includes amorphous carbon, side reactions between the carbon-based material and the first solid electrolyte may be suppressed. Therefore, the cycle characteristics of the all-solid-state secondary battery 1 including the carbon-based material may be further improved.

The carbon-based material may be, for example, a calcined material of a carbon precursor. The carbon-based material may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, or a combination thereof. The carbon-based material may be, for example, a porous carbon-based material or a non-porous carbon-based material. The porous carbon-based material may include, for example, periodic and regular two-dimensional or three-dimensional pores. The porous carbon-based material may be, for example, carbon black such as Ketjen black, acetylene black, Denka black, thermal black, or channel black; graphite; activated carbon; or a combination thereof. The form of the carbon-based material may be, for example, a particle form, a sheet form, a flake form, or the like but is not limited thereto. Any material may be used as long as the material is used as a carbon-based material in the art.

The carbon-based material may include, for example, a fibrous carbon-based material. Since a composite includes a fibrous carbon-based material, the electronic conductivity of the composite may be further improved. The composite may include the fibrous carbon-based material, and thus electronic conduction may be more easily performed from a surface to the interior of the composite. The internal resistance of a composite cathode active material including the composite may be reduced, and the cycle characteristics of a secondary battery including the composite cathode active material may be further improved. An aspect ratio of the fibrous carbon-based material may be, for example, 2 or more, 3 or more, 4 or more, 5 or more, 10 or more, or 20 or more. The aspect ratio of the fibrous carbon-based material may be, for example, in a range of 2 to 30, 3 to 30, 4 to 30, 5 to 30, 10 to 30, or 20 to 30. The aspect ratio of the fibrous carbon-based material may be, for example, 2 to 30, 2 to 20, 2 to 10, 2 to 8, 2 to 5, or 2 to 4. The fibrous carbon-based material may have an aspect ratio within such a range so that the overall electronic conductivity of the composite may be improved, and an imbalance of local electronic conductivity in the composite may be further alleviated.

The fibrous carbon-based material is defined by a length and diameter thereof, and an aspect ratio of the length to the diameter is 2 or more. The fibrous carbon-based material has a length of 1 to 50 µm, 2 to 45 µm, 3 to 30 µm, 4 to 30 µm, or 5 to 30 µm, and a diameter of 10 nm to 10 µm, 15 nm to 10 µm, or 20 to 10 µm. Here, the length and the diameter respectively refer to an average length and an average diameter.

The fibrous carbon-based material may include, for example, a carbon nanostructure. The carbon nanostructure may include, for example, carbon nanofibers (CNFs), carbon nanotubes (CNTs), carbon nanobelts, carbon nanorods, or a combination thereof. The carbon nanostructure may form a primary carbon nanostructure consisting of one carbon nanostructure and a secondary carbon nanostructure in which a plurality of carbon nanostructures aggregate.

A diameter of the primary carbon nanostructure may be, for example, in a range of 1 nm to 200 nm, 1 nm to 150 nm, 1 nm to 100 nm, 1 nm to 50 nm, 1 nm to 30 nm, or 1 nm to 20 nm. A length of the primary carbon nanostructure may be, for example, in a range of 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from a scanning electron microscope (SEM) or transmission electron microscope (TEM) image. Alternatively, the diameter and/or length of the primary carbon nanostructure may be measured by laser diffraction.

The secondary carbon nanostructure is, for example, a structure formed by primary carbon nanostructures being entirely or partially clustered to constitute a bundle-type or rope-type nanostructure. The secondary carbon nanostructure may include, for example, a bundle-type carbon nanostructure, a rope-type carbon nanostructure, or a combination thereof. A diameter of the secondary carbon nanostructure may be, for example, in a range of 2 nm to 200 nm, 3 nm to 150 nm, 5 nm to 100 nm, 5 nm to 50 nm, 5 nm to 30 nm, or 5 nm to 20 nm. A length of the secondary carbon nanotube structure may be, for example, in a range of 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm. The diameter and length of the secondary carbon nanostructure may be measured from a SEM image or an optical microscope. Alternatively, the diameter and/or length of the secondary carbon nanostructure may be measured by laser diffraction. The secondary carbon nanostructure may be dispersed, for example, in a solvent or the like, converted into the primary carbon nanostructure, and then used to prepare a composite.

### [Cathode active material layer: Binder]

The cathode active material layer 12 may further include a binder. The binder includes, for example, SBR, PTFE, PVDF, polyethylene, or the like, but one or more embodiments are not limited thereto. Any material may be used as long as the material is used as a binder in the art. A content of the binder included in the cathode active material layer 12 may be, for example, in a range of 0.1 wt% to 10 wt%, 0.5 to 5 wt%, or 0.5 to 2 wt% of the total weight of the cathode active material layer 12. The binder may be omitted.

### [Cathode active material layer: Other additives]

In addition to the above-described cathode active material, solid electrolyte, binder, and conductive material, the cathode active material layer 12 may further include, for example, additives such as a filler, a coating agent, a dispersant, and an ion-conductive adjuvant.

As a filler, a coating agent, a dispersant, an ion-conductive adjuvant, and the like that may be included in the cathode active material layer 12, known materials generally used in electrodes of an all-solid-state secondary battery may be used.

### [Interlayer]

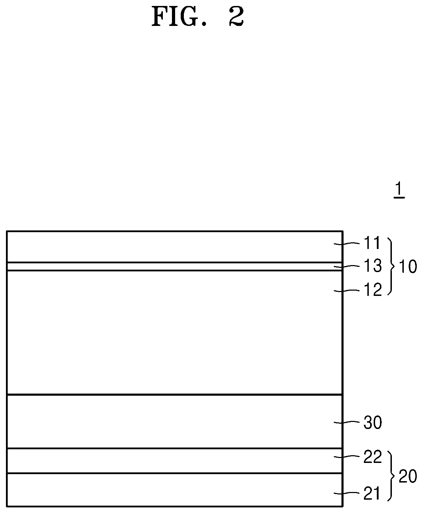

Referring to FIGS. 2, 4, 6, 8 and 10, the cathode 10 further includes an interlayer 13 disposed between the cathode current collector 11 and the cathode active material layer 12.

The interlayer 13 is disposed directly on, for example, one side or both sides of the cathode current collector 11. Another layer may not be disposed between the cathode current collector 11 and the interlayer 13. The interlayer 13 may be disposed directly on one side or both sides of the cathode current collector 11, thereby further improving the bonding strength between the cathode current collector 11 and the cathode active material layer 12. The interlayer 13 may be disposed between the cathode current collector 11 and the cathode active material layer 12, thereby more effectively suppressing side reactions between the inorganic filler and/or the first solid electrolyte and the cathode current collector 11. Therefore, the deterioration of the all-solid-state secondary battery 1 during a charging and discharging process may be suppressed, and the cycle characteristics of the all-solid-state secondary battery 1 may be further improved.

A thickness of the interlayer 13 is, for example, in a range of 0.01 to 20 %, 0.1 to 20 %, 0.5 to 20 %, 1 to 20 %, 1 to 15 %, 1 to 10 %, 2 to 8 %, or 3 to 7 % of a thickness of the cathode current collector 11. The thickness of the interlayer 13 is, for example, in a range of 10 nm to 5 µm, 50 nm to 5 µm, 200 nm to 4 µm, 500 nm to 3 µm, 500 nm to 2 µm, 500 nm to 1.5 µm, or 700 nm to 1.3 µm. Since the interlayer 13 has a thickness within such a range, the bonding strength between the cathode current collector 11 and the cathode active material layer 12 is further improved, and an increase in interfacial resistance is suppressed. The thickness of the interlayer may be measured, for example, from a SEM image of a cross-section of the interlayer.

The interlayer 13 includes, for example, a carbon-based conductive material. The carbon-based conductive material included in the interlayer 13 may be selected from carbon-based conductive materials used in the cathode active material layer 12. The interlayer 13 may include a carbon-based conductive material that is identical to the carbon-based conductive material used in the cathode active material layer 12. Since the interlayer 13 includes the carbon-based conductive material, the interlayer 13 may be, for example, a conductive layer.

The interlayer 13 may additionally include, for example, a binder. The interlayer 13 may additionally include the binder, thereby further improving the bonding strength between the cathode current collector 11 and the cathode active material layer 12. The binder included in the interlayer 13 is, for example, a conductive binder or a nonconductive binder. The conductive binder is, for example, an ion-conductive binder and/or an electron-conductive binder. A binder having both ionic conductivity and electronic conductivity may belong to an ion-conductive binder and may also belong to an electron-conductive binder.

The binder included in the interlayer 13 may be selected from binders used in the cathode active material layer 12. The interlayer 13 may include a binder that is identical to the binder used in the cathode active material layer 12. The binder included in the interlayer 13 is, for example, a fluorine-based binder. The fluorine-based binder included in the interlayer 13 is, for example, PVDF, PTFE, or a combination thereof. The interlayer 13 may be, for example, a binding layer including a binder. The interlayer 13 may be, for example, a conductive layer including a binder and a carbon-based conductive material.

The interlayer 13 may be disposed, for example, on the cathode current collector 11 in a dry or wet manner. The interlayer 13 may be disposed on the cathode current collector 11 in a dry manner through deposition, for example, chemical vapor deposition (CVD) or physical vapor deposition (PVD). The interlayer 13 may be disposed, for example, on the cathode current collector 11 in a wet manner through spin coating, dip coating, or the like. The interlayer 13 may be disposed on the cathode current collector 11, for example, by depositing a carbon-based conductive material on a substrate through deposition. The dry-coated interlayer 13 may consist of a carbon-based conductive material and may not include a binder. The interlayer 13 may be disposed on the cathode current collector 11 by, for example, applying a composition including a carbon-based conductive material, a binder, and a solvent onto a surface of an electrode current collector and drying the composition. The interlayer 13 may have a single-layer structure or a multilayer structure including a plurality of layers. The multilayer structure may be a two-layer structure, a three-layer structure, a four-layer structure, or the like.

Referring to FIGS. 1 to 3, 5, 7, 9, and 10, in the cathode 10, the cathode active material layer 12 may be disposed directly on the cathode current collector 11. Another layer, for example, an interlayer, may not be disposed between the cathode current collector 11 and the cathode active material layer 12.

In the cathode layer 10 in which the cathode active material layer 12 is disposed directly on the cathode current collector 11, the cathode current collector 11 may be inert to the inorganic filler. The cathode current collector 11 may not undergo a side reaction with the inorganic filler. The cathode current collector 11 may include, for example, tungsten (W).

### [Cathode current collector]

Referring to FIGS. 1 to 10, the cathode layer 10 includes the cathode current collector 11.

The cathode current collector 11 is provided as a plate, foil, or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted. A thickness of the cathode current collector 11 is, for example, in a range of 1 µm to 100 µm, 1 µm to 50 µm, 5 µm to 25 µm, or 10 µm to 20 µm.

The cathode current collector 11 may include, for example, a base film and a metal layer disposed on one side or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. The base film may include an insulating thermoplastic polymer, and thus when a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum ( Al), germanium (Ge), or an alloy thereof. The metal layer may serve as an electrochemical fuse to be cut when an overcurrent occurs, thereby performing a short circuit prevention function. A thickness of the metal layer may be adjusted to adjust a limiting current and a maximum current. The metal layer may be electrodeposited or deposited on the base film. When the thickness of the metal layer decreases, a limiting current and/or a maximum current of the cathode current collector 11 may decrease, thereby improving the stability of a lithium battery during a short circuit. A lead tab may be added onto the metal layer for external connection. The lead tab may be welded to the metal layer or a metal layer/base film stack through ultrasonic welding, laser welding, spot welding, or the like. While the base film and/or the metal layer is melted during welding, the metal layer may be electrically connected to the lead tab. In order to more strongly weld the metal layer and the lead tab, a metal chip may be added between the metal layer and the lead tab. The metal chip may be a flake consisting of the same material as a metal of the metal layer. The metal chip may be, for example, metal foil, a metal mesh, or the like. The metal chip may be, for example, aluminum foil, copper foil, SUS foil, or the like. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of 1 to 50 µm, 1.5 to 50 µm, 1.5 to 40 µm, or 1 to 30 µm. The base film may have a thickness within such a range, and thus a weight of an electrode assembly may be more effectively reduced. A melting point of the base film may be, for example, in a range of 100 to 300 °C, 100 to 250 °C, or 100 to 200 °C. The base film may have a melting point within such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of 0.01 to 3 µm, 0.1 to 3 µm, 0.1 to 2 µm, or 0.1 to 1 µm. The metal layer may have a thickness within such a range, and thus the stability of an electrode assembly may be secured while conductivity is maintained. A thickness of the metal chip may be, for example, in a range of 2 to 10 µm, 2 to 7 µm, or 4 to 6 µm. The metal chip may have a thickness within such a range, and thus the metal layer may be more easily connected to the lead tab. The cathode current collector 11 may have such a structure, and thus a weight of a cathode may be reduced, thereby improving the energy density of the cathode and an all-solid-state secondary battery.

### [Inactive member]

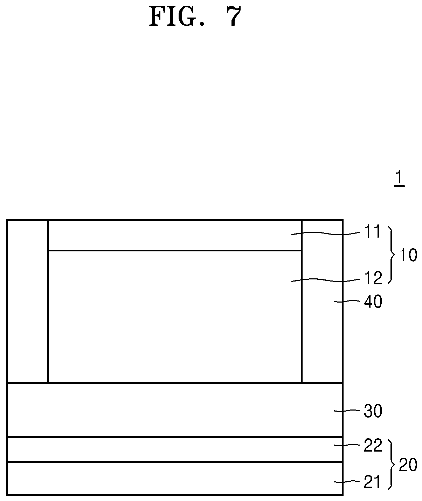

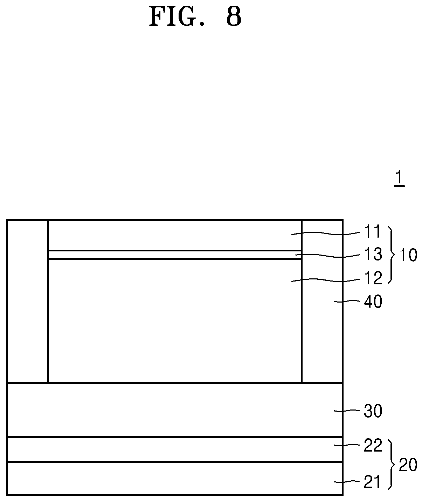

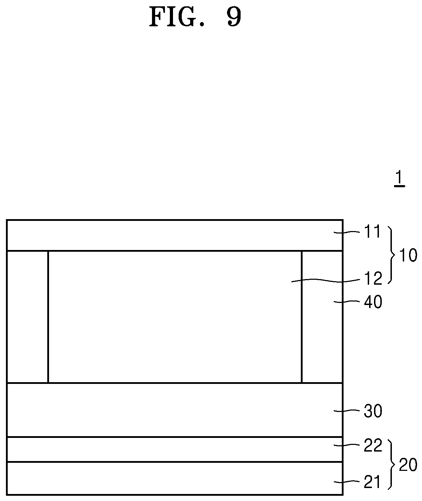

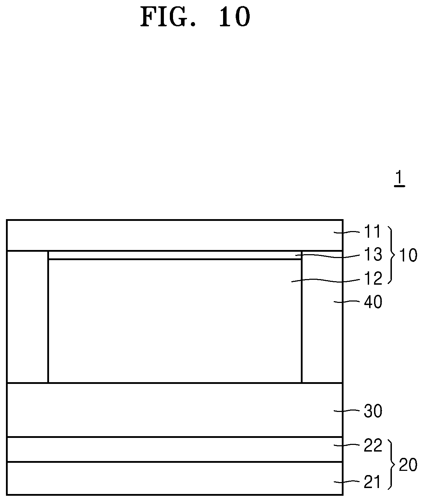

Referring to FIGS. 1 to 10, the cathode 10 includes the cathode current collector 11 and the cathode active material layer 12 disposed on one side of the cathode current collector. Referring to FIGS. 8 and 10, the cathode 10 includes the cathode current collector 11, the cathode active material layer 12 disposed on one side of the cathode current collector, and the interlayer 13 disposed between the cathode current collector 11 and the cathode active material layer 13. An inactive member 40 is disposed on one side of the cathode 10. Referring to FIGS. 7 and 8, the inactive member 40 is disposed on one side of each of the cathode active material layer 12 and the cathode current collector 11. Referring to FIGS. 9 and 10, the inactive member 40 is disposed on one side of the cathode active material layer 12 and is disposed between the electrolyte layer 30 and the cathode current collector 11 facing the electrolyte layer 30. The inactive member 40 is not disposed on one side of the cathode current collector 11. The electrolyte layer 30 may be, for example, a solid electrolyte layer.

The inactive member 40 may be included to prevent cracks of the electrolyte layer 30 during manufacturing and/or charging and discharging of the all-solid-state secondary battery 1, thereby improving the cycle characteristics of the all-solid-state secondary battery 2. In the all-solid-state secondary battery 1 that does not include the inactive member 40, nonuniform pressure is applied to the electrolyte layer 30 in contact with the cathode 10 during manufacturing and/or charging and discharging of the all-solid-state secondary battery 1 to cause cracks in the electrolyte layer 30, and a lithium metal is grown through the cracks to increase the likelihood of the occurrence of a short circuit.

In the all-solid-state secondary battery 1, a thickness of the inactive member 40 is greater than or equal to a thickness of the cathode active material layer 12. Alternatively, in the all-solid-state secondary battery 1, the thickness of the inactive member 40 is substantially equal to a thickness of the cathode 10. Since the thickness of the inactive member 40 is equal to the thickness of the cathode 10, uniform pressure may be applied between the cathode 10 and the electrolyte layer 30, and the cathode 10 and the electrolyte layer 30 may be in sufficiently close contact with each other, thereby reducing interfacial resistance between the cathode 10 and the electrolyte layer 30. In addition, the electrolyte layer 30 is sufficiently sintered during a process of pressing and manufacturing the all-solid-state secondary battery 1, thereby reducing the internal resistance of the electrolyte layer 30 and the all-solid-state secondary battery 1 including the same.

The inactive member 40 surrounds a side of the cathode 10 and is in contact with the electrolyte layer 30. The inactive member 40 may surround the side of the cathode 10 and may be in contact with the electrolyte layer 30, thereby effectively suppressing cracks of the electrolyte layer 30, which are caused in a portion of the electrolyte layer 30, which is not in contact with the cathode 10, by a pressure difference during a pressing process. The inactive member 40 surrounds the side of the cathode 10 and is separated from the anode 20, more specifically, the first anode active material layer 22. The inactive member 40 surrounds the side of the cathode 10, is in contact with the electrolyte layer 30, and is separated from the anode 20. Therefore, the likelihood of a short circuit occurring due to physical contact between the cathode 10 and the first anode active material layer 22 or the likelihood of a short circuit occurring due to the overcharging of lithium is suppressed. For example, the inactive member 40 is disposed on one side of the cathode active material layer 12 and simultaneously is disposed on one side of the cathode current collector 11, thereby more effectively suppressing the likelihood of a short circuit occurring due to contact between the cathode current collector 11 and the anode 20.

Referring to FIGS. 7 to 10, the inactive member 40 extends from one side of the cathode 10 to an end portion of the electrolyte layer 30. The inactive member 40 may extend to the end portion of the electrolyte layer 30 so that cracks occurring at the end portion of the electrolyte layer 30 may be suppressed. The end portion of the electrolyte layer 30 is an outermost portion in contact with a side of the electrolyte layer 30. The inactive member 40 extends to the outermost portion in contact with the side of the electrolyte layer 30. The inactive member 40 is separated from the anode 20, more specifically, the first anode active material layer 22. The inactive member 40 extends to the end portion of the electrolyte layer 30 but is not in contact with the anode 20. For example, the inactive member 40 may fill a space extending from one side of the cathode 30 to the end portion of the electrolyte layer 30.

Referring to FIGS. 7 to 10, a width of the inactive member 40 extending from one side of the cathode 10 to the end portion of the electrolyte layer 30 is, for example, in a range of 1 to 30 %, 1 to 25 %, 1 to 20 %, 1 to 15 %, 1 to 10 %, or 1 to 5 % of a width between one side of the cathode 10 and the other side opposite to the one side. When the width of the inactive member 40 is excessively large, the energy density of the all-solid-state secondary battery 1 is reduced. When the width of the inactive member 40 is excessively small, an effect of arranging the inactive member 40 is insignificant.

An area of the cathode 10 may be smaller than an area of the electrolyte layer 30 in contact with the cathode 10. The inactive member 40 is disposed to surround the side of the cathode 10 to compensate for a difference in area between the cathode 10 and the electrolyte layer 30. The area of the inactive member 40 compensates for the difference between the area of the cathode 10 and the area of the electrolyte layer 30, thereby effectively preventing cracks of the electrolyte layer 30 caused by a pressure difference during a pressing process. For example, the sum of the area of the cathode 10 and the area of the inactive member 40 is equal to the area of the electrolyte layer 30. The electrolyte layer 30 may be, for example, a solid electrolyte layer.

The area of the cathode 10 is, for example, less than 100 %, 99 % or less, 98 % or less, 97 % or less, 96 % or less, or 95 % or less of the area of the electrolyte layer 30. The area of the cathode 10 is, for example, in a range of 50 % to less than 100 %, 50 % to 99 %, 55 % to 98 %, 60 % to 97 %, 70 % to 96 %, 80 % to 95 %, or 85 % to 95 % of the area of the electrolyte layer 30.

When the area of the cathode 10 is greater than or equal to the area of the electrolyte layer 30, a short circuit occurs due to physical contact between the cathode 10 and the first anode active material layer 22, or the likelihood of a short circuit occurring due to the overcharging of lithium increases. The area of the cathode 10 is, for example, equal to an area of the cathode active material layer 12. The area of the cathode 10 is, for example, equal to an area of the cathode current collector 11.

The area of the inactive member 40 is, for example, 50 % or less, 40 % or less, 30 % or less, 20 % or less, or 10 % or less of the area of the cathode 10. The area of the inactive member 40 is, for example, in a range of 1 % to 50 %, 5 % to 40 %, 5 % to 30 %, 5 % to 20 %, or 5 % to 15 % of the area of the cathode 10.

The area of the cathode 10 is smaller than an area of the anode current collector 21. The area of the cathode 10 is, for example, less than 100 %, 99 % or less, 98 % or less, 97 % or less, 96 % or less, or 95 % or less of the area of the anode current collector 21. The area of the cathode 10 is, for example, in a range of 50 % to less than 100 %, 50 % to 99 %, 55 % to 98 %, 60 % to 97 %, 70 % to 96 %, 80 % to 95 %, or 85 % to 95 % of the area of the anode current collector 21. The area of the anode current collector 21 is, for example, equal to an area of the anode 20. The area of the anode current collector 21 is, for example, equal to an area of the first anode active material layer 22.

In the present disclosure, "equal" area, length, width, thickness, and/or shape includes all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

The thickness of the inactive member 40 is, for example, greater than a thickness of the first anode active material layer 22. The thickness of the first anode active material layer 22 is, for example, 50 % or less, 40 % or less, 30 % or less, 20 % or less, or 10 % or less of the thickness of the inactive member 40. The thickness of the first anode active material layer 22 is, for example, in a range of 1 % to 50 %, 1 % to 40 %, 1 % to 30 %, 1 % to 20 %, or 1 % to 10 % of the thickness of the inactive member 40.

The inactive member 40 may be a gasket. By using the gasket as the inactive member 40, cracks of the electrolyte layer 30 caused by a pressure difference during a pressing process may be effectively suppressed.

The inactive member 40 has, for example, a single-layer structure. Alternatively, although not shown in the drawings, the inactive member 40 may have a multilayer structure. In the inactive member 40 having a multilayer structure, respective layers may have different compositions. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layer effectively prevents separation between the cathode 10 and the electrolyte layer 30 due to a volume change of the cathode 10 which occurs during a charging and discharging process of the all-solid-state secondary battery 10 and provides the bonding strength between the support layer and other layers to improve the film strength of the inactive member 40. The support layer provides a supporting force to the inactive member 40, prevents the nonuniformity of pressure applied to the electrolyte layer 30 during a pressing process or a charging and discharging process, and prevents the shape deformation of the all-solid-state secondary battery 1 to be manufactured.

The inactive member 40 is, for example, a flame-retardant inactive member. The flame-retardant inactive member may provide flame retardancy to prevent the likelihood of thermal runaway and ignition of the all-solid-state secondary battery 1. As a result, the safety of the all-solid-state secondary battery 1 is further improved. The flame-retardant inactive member absorbs residual moisture in the all-solid-state secondary battery 1, thereby preventing the deterioration of the all-solid-state secondary battery 1 and improving the lifespan characteristics of the all-solid-state secondary battery 1. The flame-retardant inactive material may include a matrix and an additive.

The inactive member 40 is a member that does not include an electrochemically active material, for example, an electrode active material. The electrode active material is a material that absorbs/desorbs lithium. The inactive member 40 is a member consisting of a material used in the art other than an electrode active material.

### [Anode layer]

### [First anode active material layer: Anode active material]

Referring to FIGS. 1 to 10, the anode 20 includes the first anode active material layer 22. The first anode active material layer 22 includes, for example, an anode active material and a binder.

The anode active material included in the first anode active material layer 22 is, for example, an anode material capable of forming an alloy or compound with lithium.

The anode active material included in the first anode active material layer 22 has, for example, a particle form. An average particle diameter of the anode active material having a particle form is, for example, 4 µm or less, 3 µm or less, 2 µm or less, 1 µm or less, 500 nm or less, 300 nm or less, or 100 nm or less. The average particle diameter of the anode active material having a particle form is, for example, in a range of 10 nm to 4 µm, 10 nm to 3 µm, 10 nm to 2 µm, 10 nm to 1 µm, 10 nm to 500 nm, 10 nm to 300 nm, or 10 nm to 100 nm. The anode active material may have an average particle diameter within such a range, and thus the reversible absorbing and/or desorbing of lithium may be easier during charging and discharging. The average particle diameter of the anode active material is, for example, a median diameter (D₅₀) measured by using a laser type particle size distribution meter.

The anode active material included in the first anode active material layer 22 includes, for example, at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, for example, amorphous carbon. The amorphous carbon is, for example, carbon black (CB), acetylene black (AB), furnace black (FB), Ketjen black (KB), graphene, or the like but is not necessarily limited thereto. Any material may be used as long as the material is classified as amorphous carbon in the art. The amorphous carbon is carbon that has no crystallinity or very low crystallinity and is distinguished from crystalline carbon or graphite-based carbon.

The carbon-based anode active material may be, for example, porous carbon. A pore volume of the porous carbon is, for example, in a range of 0.1 cc/g to 10.0 cc/g, 0.5 cc/g to 5 cc/g, or 0.1 cc/g to 1 cc/g. An average pore diameter of the porous carbon is, for example, in a range of 1 nm to 50 nm, 1 nm to 30 nm, or 1 nm to 10 nm. A Brunauer-Emmett-Teller (BET) specific surface area of the porous carbon is, for example, in a range of 100 m2/g to 3,000 m2/g.

The metal or metalloid anode active material includes at least one selected from the group consisting of gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material may be used as long as the material is used as a metal anode active material or a metalloid anode active material which forms an alloy or compound with lithium in the art. For example, nickel (Ni) does not form an alloy with lithium and thus is not a metal anode active material.

The first anode active material layer 22 includes one type of anode active material among such anode active materials or a mixture of a plurality of different anode active materials. For example, the first anode active material layer 22 includes only amorphous carbon or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). A mixing ratio of the mixture of the amorphous carbon and gold or the like is, for example, a weight ratio in a range of 99:1 to 1:99, 10:1 to 1:2, 5:1 to 1:1, or 4:1 to 2:1, but one or more embodiments are not necessarily limited to such a range. The mixing ratio is selected according to the required characteristics of the all-solid-state secondary battery 1. The anode active material has such a composition, and thus the cycle characteristics of the all-solid-state secondary battery 1 are further improved.

The anode active material included in the first anode active material layer 22 includes, for example, a mixture of first particles consisting of amorphous carbon and second particles consisting of a metal or metalloid. The metal or metalloid includes, for example, gold (Au), platinum (Pt), palladium (Pd), silicon (Si), silver (Ag), aluminum (Al), bismuth (Bi), tin (Sn), zinc (Zn), and the like. Alternatively, the metalloid is a semiconductor. A content of the second particles is in a range of 1 to 99 wt%, 1 to 60 wt%, 8 to 60 wt%, 10 to 50 wt%, 15 to 40 wt%, or 20 to 30 wt% with respect to the total weight of the mixture. The second particles have a content within such a range, and thus, for example, the cycle characteristics of the all-solid-state secondary battery 1 are further improved.

Alternatively, the first anode active material layer 22 includes a composite anode active material. The composite anode active material may include, for example, a carbon-based support and a metal-based anode active material supported on the carbon-based support. The composite anode active material has such a structure so that the localization of the metal-based active material in the first anode active material layer is prevented, and the uniform distribution thereof is obtained. As a result, the cycle characteristics of the all-solid-state secondary battery 1 including the first anode active material layer 22 are further improved.

The metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), tellurium (Te), zinc (Zn), and the like. The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin ( Sn) oxide, tellurium (Te) oxide, zinc (Zn) oxide, and the like. The metal oxide may include, for example, AuₓO_{y} (0<x≤2 and 0<y≤3), PtₓO_{y} (0<x≤1 and 0<y≤2), PdₓO_{y} (0<x≤1 and 0<y≤1), SiₓO_{y} (0<x≤1 and 0<y≤2), AgₓO_{y} (0<x≤2 and 0<y≤1), AlₓO_{y} (0<x≤2 and 0<y≤3), BiₓO_{y} (0<x≤2 and 0<y≤3), SnₓO_{y} (0<x≤1 and 0<y≤2), TeₓO_{y} (0<x≤1 and 0<y≤3), ZnₓO_{y} (0<x≤1 and 0<y≤1), or a combination thereof. The composite of a metal and a metal oxide may include, for example, a composite of Au and AuₓO_{y} (0<x≤2 and 0<y≤3), a composite of Pt and PtₓO_{y} (0<x≤1 and 0<y≤2), a composite of Pd and PdₓO_{y} (0<x≤1 and 0<y≤1), a composite of Si and SiₓO_{y} (0<x≤1 and 0<y≤2), a composite of Ag and AgₓO_{y} (0<x≤2 and 0<y≤1), a composite of Al and AlₓO_{y} (0<x≤2 and 0<y≤3), a composite of Bi and BiₓO_{y} (0<x≤2 and 0<y≤3), a composite of Sn and SnₓO_{y} (0<x≤1 and 0<y≤2), a composite of Te and TeₓO_{y} (0<x≤1 and 0<y≤3), a composite of Zn and ZnₓO_{y} (0<x≤1 and 0<y≤1), or a combination thereof.

The carbon-based support is, for example, amorphous carbon. The amorphous carbon is, for example, CB, AB, FB, KB, graphene, activated carbon, CNFs, CNTs, and the like but is not necessarily limited thereto. Any material may be used as long as the material is classified as amorphous carbon in the art. The amorphous carbon is carbon that has no crystallinity or very low crystallinity and is distinguished from crystalline carbon or graphite-based carbon. A carbonaceous material is, for example, a carbon-based anode active material.

The composite anode active material has, for example, a particle form. A particle diameter of the composite anode active material having a particle form is, for example, in a range of 10 nm to 4 µm, 10 nm to 1 µm, 10 nm to 500 nm, 10 nm to 200 nm, or 10 nm to 100 nm. The composite anode active material may have a particle diameter within such a range, and thus the reversible absorbing and/or desorbing of lithium may be easier during charging and discharging. The metal-based anode active material supported on a support may have, for example, a particle form. A particle diameter of the metal-based anode active material may be, for example, in a range of 1 nm to 200 nm, 1 nm to 150 nm, 5 nm to 100 nm, or 10 nm to 50 nm. The carbon-based support may have, for example, a particle form. A particle diameter of the carbon-based support may be, for example, in a range of 10 nm to 2 µm, 10 nm to 1 µm, 10 nm to 500 nm, 10 nm to 200 nm, or 10 nm to 100 nm. The carbon-based support may have a particle diameter within such a range and thus may be more uniformly disposed in the first anode active material layer. The carbon-based support may include, for example, nanoparticles having a particle diameter of 500 nm or less. Each of the particle diameter of the composite anode active material, the particle diameter of the metal-based anode active material, and the particle diameter of the carbon-based support is, for example, an average particle diameter. The average particle diameter is, for example, a median diameter (D₅₀) measured by using a laser type particle size distribution meter. Alternatively, the average particle diameter may be determined automatically by using software, for example, from an electron microscope image or may be manually determined according to a manual.

### [First anode active material layer: Binder]

The first anode active material layer 22 includes the binder. The binder includes, for example, SBR, PTFE, PVDF, PE, a vinylidene fluoride/hexafluoropropylene copolymer, PAN, polymethyl methacrylate, or the like, but one or more embodiments are not necessarily limited thereto. Any material may be used as long as the material is used as a binder in the art. The binder may be provided as a single binder or a plurality of different binders.

The first anode active material layer 22 includes the binder and thus is stabilized on the anode current collector 21. In addition, cracks of the first anode active material layer 22 are suppressed despite a volume change and/or a relative position change of the first anode active material layer 22 during a charging and discharging process. For example, when the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 is in contact with the electrolyte layer 30, which causes an increase in the likelihood of the occurrence of a short circuit. The first anode active material layer 22 is prepared, for example, by applying a slurry, in which a material constituting the first anode active material layer 22 is dispersed, onto the anode current collector 21 and drying the slurry. The first anode active material layer 22 may include the binder, and thus an anode active material may be stably distributed in the slurry. For example, when the slurry is applied onto the anode current collector 21 through screen printing, the clogging of a screen (for example, clogging by aggregates of an anode active material) may be suppressed.

### [First anode active material layer: Other additives]

The first anode active material layer 22 may further include additives used in the all-solid-state secondary battery 1 according to a related art, such as a filler, a coating agent, a dispersant, and an ion-conductive adjuvant.

### [First anode active material layer: Solid electrolyte]

The first anode active material layer 22 may further include a solid electrolyte. The solid electrolyte may be, for example, a material selected from solid electrolytes included in the electrolyte layer 30. The solid electrolyte included in the first anode active material layer 22 may serve as a reaction point at which the formation of a lithium metal starts in the first anode active material layer 22, may serve as a space in which the formed lithium metal is stored, or may serve as a path for transferring lithium ions. The solid electrolyte may be omitted.

In the first anode active material layer 22, for example, a content of the solid electrolyte may be high in a region adjacent to the electrolyte layer 30 and may be low in a region adjacent to the anode current collector 21. The solid electrolyte in the first anode active material layer 22 may have, for example, a concentration gradient in which a concentration decreases from the region adjacent to the electrolyte layer 30 to the region adjacent to the anode current collector 21.

### [First anode active material layer: Charge capacity]

A ratio B/A of initial charge capacity B of the first anode active material layer 22 to initial charge capacity A of the cathode active material layer 12 is in a range of 0.005 to 0.45. The initial charge capacity of the cathode active material layer 12 is determined at a maximum charging voltage with respect to Li/Li+ from a 1st open circuit voltage. The initial charge capacity of the first anode active material layer 22 is determined at 0.01 V with respect to Li/Li+ from a 2nd open circuit voltage.

The maximum charging voltage is determined by types of cathode active materials. The maximum charging voltage may be, for example, 1.5 V, 2.0 V, 2.5 V, 3.0 V, 3.5 V, 4.0 V, 4.2 V, or 4.3 V. For example, a maximum charging voltage of Li₂S or a Li₂S composite may be 2.5 V with respect to Li/Li+. For example, the maximum charging voltage of Li₂S or the Li₂S composite may be 3.0 V with respect to Li/Li+. The ratio B/A of the initial charge capacity B of the first anode active material layer 22 to the initial charge capacity A of the cathode active material layer is, for example, in a range of 0.01 to 0.3, 0.01 to 0.2, or 0.05 to 0.1. The initial charge capacity (mAh) of the cathode active material layer 12 is obtained by multiplying a charge specific capacity (mAh/g) of a cathode active material by a mass (g) of the cathode active material in the cathode active material layer 12. When various types of cathode active materials are used, a value of charge specific capacity×mass is calculated for each cathode active material, and the sum of the values is the initial charge capacity of the cathode active material layer 12. The initial charge capacity of the first anode active material layer 22 is also calculated in the same manner. The initial charge capacity of the first anode active material layer 22 is obtained by multiplying a charge specific capacity (mAh/g) of an anode active material by a mass of the anode active material in the first anode active material layer 22. When various types of anode active materials are used, a value of charge specific capacity×mass is calculated for each anode active material, and the sum of the values is the initial charge capacity of the first anode active material layer 22. The charge specific capacity of each of the cathode active material and the anode active material may be measured by using an all-solid-state half-cell that uses a lithium metal as a counter electrode.

The initial charge capacity of each of the cathode active material layer 12 and the first anode active material layer 22 may be directly measured at a constant current density, for example, 0.1 mA/cm2 by using an all-solid-state half-cell. The measurement may be performed on a cathode through charging at an operating voltage from a 1st open circuit voltage (OCV) to a maximum charging voltage, for example, 3.0 V (vs. Li/Li+). For an anode, the measurement may be performed on the anode, for example, a lithium metal, through charging at an operating voltage from a 2nd OCV to 0.01 V. For example, an all-solid-state half-cell including a cathode active material layer may be charged at a constant current of 0.1 mA/cm2 from a 1st OCV to 3.0 V, and an all-solid-state half-cell including a first anode active material layer may be charged at a constant current of 0.1 mA/cm2 from a 2nd OCV to 0.01 V. A current density during constant current charging may be, for example, 0.2 mA/cm2 or 0.5 mA/cm2. The all-solid-state half-cell including the cathode active material layer may be charged, for example, from a 1st OCV to 2.5 V, 2.0 V, 3.5 V, or 4.0 V. A maximum charging voltage of the cathode active material layer may be determined by a maximum voltage of a battery that satisfies the safety conditions according to JIS C 8712:2015 of the Japanese Standards Association.

When the initial charge capacity of the first anode active material layer 22 is excessively low, the first anode active material layer 22 becomes very thin, and thus, during a repeated charging and discharging process, lithium dendrites formed between the first anode active material layer 22 and the anode current collector 21 collapse the first anode active material layer 22, which makes it difficult to improve the cycle characteristics of the all-solid-state secondary battery 1. When the charge capacity of the first anode active material layer 22 excessively increases, the energy density of the all-solid-state secondary battery 1 decreases, and the internal resistance of the all-solid-state secondary battery 1 due to the first anode active material layer 22 increases, which makes it difficult to improve the cycle characteristics of the all-solid-state secondary battery 1.

The thickness of the first anode active material layer 22 is, for example, 50 % or less, 40 % or less, 30 % or less, 20 % or less, 10 % or less, or 5 % or less of the thickness of the cathode active material layer 12. The thickness of the first anode active material layer 22 is, for example, in a range of 1 to 50 %, 1 to 40 %, 1 to 30 %, 1 to 20 %, 1 to 10 %, or 1 to 5 % of the thickness of the cathode active material layer 12. The thickness of the first anode active material layer 22 is, for example, in a range of 1 µm to 20 µm, 2 µm to 15 µm, or 3 µm to 10 µm. When the first anode active material layer 22 is excessively thin, lithium dendrites formed between the first anode active material layer 22 and the anode current collector 21 collapse the first anode active material layer 22, which makes it difficult to improve the cycle characteristics of the all-solid-state secondary battery 1. When the thickness of the first anode active material layer 22 excessively increases, the energy density of the all-solid-state secondary battery 1 decreases, and the internal resistance of the all-solid-state secondary battery 1 due to the first anode active material layer 22 increases, which makes it difficult to improve the cycle characteristics of the all-solid-state secondary battery 1. When the thickness of the first anode active material layer 22 decreases, for example, the initial charge capacity of the first anode active material layer 22 also decreases.

### [Second anode active material layer]

Referring to FIGS. 7 and 8, the all-solid-state secondary battery 1 further includes a second anode active material layer 24 which, after charging, is disposed between the anode current collector 21 and the first anode active material layer 22. The second anode active material layer 24 is a metal layer including lithium or a lithium alloy. The metal layer includes lithium or a lithium alloy. Therefore, the second anode active material layer 24 is the metal layer including lithium and thus serves, for example, as a lithium reservoir. The lithium alloy is, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like but is not limited thereto. Any material may be used as long as the material is used as a lithium alloy in the art. The second anode active material layer 24 may consist of one of such alloys or lithium or may consist of various types of alloys. The second anode active material layer 24 is, for example, a plated layer. For example, the second anode active material layer 24 is precipitated between the first anode active material layer 22 and the anode current collector 21 during a charging process of the all-solid-state secondary battery 1.

A thickness of the second anode active material layer 24 is not particularly limited, but is, for example, in a range of 1 µm to 500 µm, 1 µm to 200 µm, 1 µm to 150 µm, 1 µm to 100 µm, or 1 µm to 50 µm. When the second anode active material layer 24 is excessively thin, it is difficult for the second anode active material layer 24 to serve as a lithium reservoir. When the second anode active material layer 24 is excessively thick, the mass and volume of the all-solid-state secondary battery 1 may increase, and the cycle characteristics of the all-solid-state secondary battery 1 may instead deteriorate.

Alternatively, in the all-solid-state secondary battery 1, for example, before assembly of the all-solid-state secondary battery 1, the second anode active material layer 24 may be disposed between the anode current collector 21 and the first anode active material layer 22. When the second anode active material layer 24 is disposed between the anode current collector 21 and the first anode active material layer 22 before the assembly of the all-solid-state secondary battery 1, the second anode active material layer 24 is the metal layer including lithium and thus serves as a lithium reservoir. For example, before the assembly of the all-solid-state secondary battery 1, lithium foil may be disposed between the anode current collector 21 and the first anode active material layer 22.

When the second anode active material layer 24 is precipitated by the all-solid-state secondary battery 1 being charged after being assembled, since the all-solid-state secondary battery 1 does not include the second anode active material layer 24 during the assembly of the all-solid-state secondary battery 1, the energy density of the all-solid-state secondary battery 1 increases. During charging of the all-solid-state secondary battery 1, the first anode active material layer 22 is charged beyond a charge capacity thereof. That is, the first anode active material layer 22 is overcharged. At the beginning of charging, lithium is absorbed in the first anode active material layer 22. The anode active material included in the first anode active material layer 22 forms an alloy or compound with lithium ions that move from the cathode layer 10. When charging is performed beyond a capacity of the first anode active material layer 22, for example, lithium is precipitated on a rear side of the first anode active material layer 22, for example, between the anode current collector 21 and the first anode active material layer 22, and a metal layer corresponding to the second anode active material layer 24 is formed by the precipitated lithium. The second anode active material layer 24 is a metal layer mainly consisting of lithium (for example, metallic lithium). Such a result is obtained, for example, because the anode active material included in the first anode active material layer 22 includes a material that forms an alloy or compound with lithium. During discharging, lithium in the first anode active material layer 22 and the second anode active material layer 24, for example, lithium in the metal layer, may be ionized to move toward the cathode layer 10. Therefore, in the all-solid-state secondary battery 1, lithium may be used as an anode active material. In addition, since the first anode active material layer 22 covers the second anode active material layer 24, the first anode active material layer 22 serves as a protective layer for the second anode active material layer 24, for example, the metal layer, and simultaneously serves to suppress the precipitation growth of lithium dendrites. Therefore, a short circuit and a reduction in capacity of the all-solid-state secondary battery 1 are suppressed, thereby improving the cycle characteristics of the all-solid-state secondary battery 1. In addition, when the second anode active material layer 24 is disposed by the all-solid-state secondary battery 1 being charged after being assembled, the anode 20, for example, the anode current collector 21, the first anode active material layer 22, and a region therebetween, are Li-free regions that do not include lithium (Li) in an initial state of the all-solid-state secondary battery 1 or in a state after full discharging thereof.

### [Anode current collector]

The anode layer 20 includes the anode current collector 21. The anode current collector 21 consists of, for example, a material that does not react with lithium, that is, a material that does not form both an alloy and a compound with lithium. The material constituting the anode current collector 21 includes, for example, copper (Cu), stainless steel, titanium (Ti), iron (Fe), cobalt (Co), nickel (Ni), and the like, but one or more embodiments are not necessarily limited thereto. Any material may be used as long as the material is used as an electrode current collector in the art. The anode current collector 21 may consist of one type of the above-described metals or an alloy or coating material of two or more types of metals. The anode current collector 21 is, for example, in the form of a plate or foil.

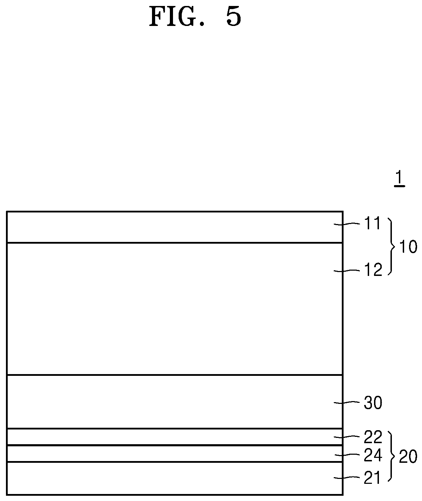

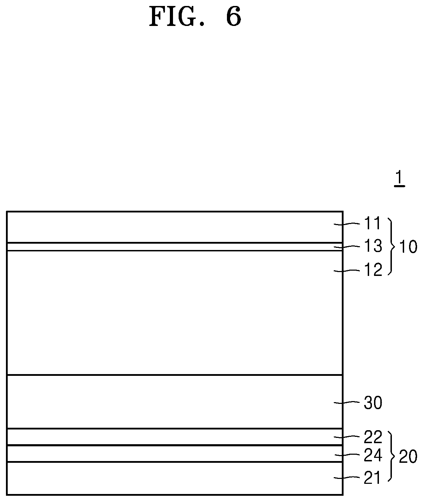

Referring to FIGS. 5 and 6, the all-solid-state secondary battery 1 may further include a thin film 23, which includes an element capable of forming an alloy with lithium, on one side of the anode current collector 21. The thin film 23 is disposed between the anode current collector 21 and the first anode active material layer 22. The thin film 23 includes, for example, an element capable of forming an alloy with lithium. The element capable of forming an alloy with lithium is gold, silver, zinc, tin, indium, silicon, aluminum, bismuth, or the like but is not necessarily limited thereto. Any material may be used as long as the material may form an alloy with lithium in the art. The thin film 23 consists of one of such metals or an alloy of various types of metals. Since the thin film 23 is disposed on one side of the anode current collector 21, for example, a precipitated form of the second anode active material layer 24 precipitated between the thin film 23 and the first anode active material layer 22 may be further planarized, and the cycle characteristics of the all-solid-state secondary battery 1 may be further improved.

A thickness of the thin film 23 is, for example, in a range of 1 nm to 800 nm, 10 nm to 700 nm, 50 nm to 600 nm, or 100 nm to 500 nm. When the thickness of the thin film 23 is less than 1 nm, it may be difficult for the thin film 23 to function. When the film 23 is excessively thick, the thin film 23 itself may adsorb lithium, and thus an amount of lithium precipitated in the anode layer 20 may decrease, resulting in a decrease in energy density of the all-solid-state secondary battery 1 and a deterioration in cycle characteristics of the all-solid-state secondary battery 1. The thin film 23 may be disposed on the anode current collector 21 through, for example, vacuum deposition, sputtering, plating, or the like, but one or more embodiments are not necessarily limited to such a method. Any method may be used as long as the method may form the thin film 23 in the art.

Although not shown in the drawings, the anode current collector 21 may include, for example, a base film and a metal layer disposed on one side or both sides of the base film. The base film may include, for example, a polymer. The polymer may be, for example, a thermoplastic polymer. The polymer may include, for example, PET, PE, PP, PBT, PI, or a combination thereof. The polymer may be an insulating polymer. The base film may include an insulating thermoplastic polymer, and thus when a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 are defined as for the above-described cathode current collector 11. Since the anode current collector 21 has such a structure, the weight of an anode may be reduced, thereby improving the energy density of the anode and a lithium battery.

The present inventive concept will be described in more detail through the following Examples and Comparative Examples. However, Examples are for illustrative purposes only, and the scope of the present inventive concept is not limited by Examples.

### (Preparation of inorganic filler)

### Preparation Example 1: Preparation of LiAlO₀.₇₅Cl_{2.5}

Lithium chloride (LiCl) and aluminum trichloride (AlCl₃) were mixed and heated at a temperature of 200 °C to prepare lithium tetrachloroaluminate (LiAlCl₄).

A small amount of metallic Al chips was added to the molten lithium tetrachloroaluminate to remove impurities.

The lithium tetrachloroaluminate (LiAlCl₄) and Sb₂O₃ were mixed at a molar ratio of 4:1 and heated at a temperature of 250 °C for 2 hours in an argon atmosphere to remove volatilized SbCl₃ gas, thereby preparing a LiAlO₀.₇₅Cl₂.₅ inorganic filler.

The ionic conductivity of the LiAlO_{0.}7₅Cl_{2.5} (LACO) inorganic filler measured at a temperature of 25 °C and a pressure of 1 atm through AC impedance was about 1 mS/cm. An amplitude voltage used for the AC impedance was 50 mV, and a frequency was in a range of 1 MHz to 1 Hz. The LACO inorganic filler was amorphous and glassy and had a glass transition temperature. It was confirmed that, since no crystalline peak appeared in an XRD spectrum, the LACO inorganic filler was in an amorphous phase. A melting temperature (Tm) of the LACO inorganic filler was about 128 °C at a pressure of 1 atm. The melting point of the LACO inorganic filler was measured by using a DSC. A glass transition temperature of the LACO inorganic filler was about -17 °C at a pressure of 1 atm. An elastic modulus of the LACO inorganic filler was about 1.5 GPa at a temperature of 30 °C. The glass transition temperature and elastic modulus of the LACO inorganic filler were measured by using a DMA. A viscoelastic creep rate of the LACO inorganic filler was 4×10⁻⁴ %/s. The viscoelastic creep rate was measured by using a universal test machine (UTM).

### Preparation Example 2: Preparation of LiAl₁.₃O₁.₁Cl_{2.7} (LACO110)

LACO110 was prepared in the same manner as in Preparation Example 1, except that contents of LiCl, AlCl₃, and Sb₂O₃ were stoichiometrically changed to obtain LACO110.

### (Preparation of sulfide-based composite cathode active material)

### Preparation Example 3: Li₂S-LiI-CNF composite cathode active material

Li₂S and LiI were mixed at a weight ratio of 30:20. The obtained mixture was mechanically milled by using a ball mill to prepare a Li₂S-LiI composite. Milling conditions were 25 °C and 510 rpm for 10 hours.

The Li₂S-LiI composite and CNFs were mixed at a weight ratio of 50:10. The obtained mixture was mechanically milled by using a ball mill to prepare a Li₂S-LiI-CNF composite. Milling conditions were 25 °C and 510 rpm for 10 hours. The Li₂S-CNF-LiI composite was used as a composite cathode active material.

### (Manufacturing of all-solid-state secondary battery)

### Example 1: Carbon-coated Al cathode current collector/Li₆PS₅Cl+LACO (37:3) and Li₂S-LiI-CNF cathode active material layer/(10 wt% LACO+90 wt% Li₆PS₅Cl) solid electrolyte layer/Ag-C anode layer

### (Preparation of cathode layer)

An all-solid-state secondary battery was manufactured in the same manner as in Example 1, except that the following cathode including a sulfide-based cathode active material was used.

As a cathode active material, the Li₂S-LiI-CNF composite prepared in Preparation Example 3 was prepared. Li₆PS₅Cl (D₅₀=3.0 µm, crystalline), which was an argyrodite-type crystal, was prepared as a solid electrolyte. LACO prepared in Preparation Example 1 was prepared as an inorganic filler. PTFE was prepared as a binder. Such materials were mixed such that a weight ratio of a composite cathode active material, the solid electrolyte, the inorganic filler, and the binder was 60:37:3:1.2, thereby preparing a cathode mixture. The cathode mixture was obtained through mixing using a ball mill.

The cathode mixture was disposed on one side of a cathode current collector consisting of aluminum foil, of which one side was coated with carbon, and was plate-pressed at a pressure of 200 MPa for 10 minutes to prepare the cathode. The total thickness of a cathode layer was about 113.8 µm. A thickness of a cathode active material layer was about 93.8 µm, and a thickness of the carbon-coated aluminum foil was about 20 µm.

### (Preparation of anode)

SUS foil having a thickness of 10 µm was prepared as an anode current collector. As a first anode active material, a composite anode active material prepared in Preparation Example 1 was prepared. As a second anode active material, a 3:1 weight ratio mixture of CB particles with a primary particle diameter of about 30 nm and silver (Ag) particles with an average particle diameter of about 60 nm were prepared.

3 g of a composite anode active material powder and 1 g of a mixture of CBs and silver (Ag) were put into a container, and 4 g of an N-methyl-2-pyrrolidone (NMP) solution including 7 wt% of a PVDF binder (#9300 manufactured by Kureha Corporation) was added thereto to prepare a mixed solution. While NMP was gradually added to the prepared mixed solution, the mixed solution was stirred to prepare a slurry. The prepared slurry was applied onto a SUS substrate by using a bar coater, dried in air at a temperature of 80 °C for 10 minutes, and then vacuum-dried at a temperature of 40 °C for 10 hours to prepare a stack. The prepared stack was cold roll-pressed to planarize a surface thereof, thereby preparing an anode having a first anode active material layer/anode current collector structure. A thickness of the first anode active material layer was about 27 µm.

A ratio B/A of initial charge capacity B of the first anode active material layer to initial charge capacity A of the cathode active material layer was less than 1. The initial charge capacity of the cathode active material layer was determined by charging from a 1st OCV to a voltage of 4.25 V vs. Li/Li+. The initial charge capacity of the first anode active material layer was determined by charging from a 2nd OCV to a voltage of 0.01 V vs. Li/Li+.

### (Preparation of solid electrolyte layer)

The LACO inorganic filler prepared in Preparation Example 1 was ball-milled to have a particle size of an average particle diameter of 1 µm.

A mixture was prepared by adding a Li₆PS₅Cl solid electrolyte (D₅₀=3.0 µm, crystalline) which was an argyrodite-type crystal, the LACO inorganic filler, and an acrylic binder. In the mixture, the total weight of Li₆PS₅Cl and LACO is 98.5 wt%, and a content of the acrylic binder is 1.5 wt%. A mixing weight ratio of Li₆PS₅Cl to LACO is 90:10.

The mixture was provided onto a PET substrate and plate-pressed at a pressure of 200 MPa for 10 minutes to prepare a solid electrolyte layer. A melting point of the LACO inorganic filler is about 135 °C.

### (Manufacturing of all-solid-state secondary battery)

The solid electrolyte layer was disposed on the anode such that the first anode active material layer was in contact with the solid electrolyte layer, and the cathode was disposed on the solid electrolyte layer such that the cathode active material layer was in contact with the solid electrolyte layer, thereby preparing a stack.

The prepared stack was plate-pressed at a temperature of 85 °C and a pressure of 500 MPa for 30 minutes. Through such pressing, the solid electrolyte layer is sintered to improve battery characteristics. A thickness of the sintered solid electrolyte layer was about 20 µm. The pressed stack was put into a pouch and vacuum-sealed to manufacture an all-solid-state secondary battery. Portions of the cathode current collector and the anode current collector were extended to the outside of the sealed battery and used as a cathode terminal and an anode terminal.

Example 2: Carbon-coated Al cathode current collector/Li₆PS₅Cl+LACO (37:3) and Li₂S-LiI-CNF cathode active material layer/(5 wt% LACO+95 wt% Li₆PS₅Cl) solid electrolyte layer/Ag-C anode layer. An all-solid-state secondary battery was manufactured in the same manner as in Example 1, except that a mixing weight ratio of Li₆PS₅Cl to LACO in a mixture was changed to 95:5.

Example 3: Carbon-coated Al cathode current collector/Li₆PS₅Cl+LACO (37:3) and Li₂S-LiI-CNF cathode active material layer/(1 wt% LACO+99 wt% Li₆PS₅Cl) solid electrolyte layer/Ag-C anode layer

An all-solid-state secondary battery was manufactured in the same manner as in Example 1, except that a weight ratio of Li₆PS₅Cl to LACO in a mixture was changed to 99:1.

Example 4: Carbon-coated Al cathode current collector/Li₆PS₅Cl+LACO (37:3) and Li₂S-LiI-CNF cathode active material layer/(10 wt% LACO+90 wt% bimodal Li₆PS₅Cl) solid electrolyte layer/Ag-C anode layer

An all-solid-state secondary battery was manufactured in the same manner as in Example 1, except that a solid electrolyte layer was prepared according to the following process.

A first mixture was prepared by adding a Li₆PS₅Cl solid electrolyte (D₅₀=3.0 µm, crystalline) which was an argyrodite-type crystal, a Li₆PS₅Cl solid electrolyte (D₅₀=1.0 µm, crystalline), the LACO inorganic filler prepared in Preparation Example 1, and an acrylic binder. In the first mixture, the total weight of Li₆PS₅Cl and LACO is 98.5 wt%, and a content of the acrylic binder is 1.5 wt%. A mixing weight ratio of Li₆PS₅Cl to LACO is 90:10. A mixing weight ratio of the Li₆PS₅Cl solid electrolyte (D₅₀=3.0 µm, crystalline) to the Li₆PS₅Cl solid electrolyte (D₅₀=1.0 µm, crystalline) is 2:8.

The first mixture was provided onto a PET substrate and plate-pressed at a pressure of 200 MPa for 10 minutes to prepare the solid electrolyte layer. A melting point of the LACO inorganic filler is about 135 °C.

Example 5: Carbon-coated Al cathode current collector/Li₆PS₅Cl+LACO (37:3) and Li₂S-LiI-CNF cathode active material layer/(10 wt% LACO+90 wt% Li₆PS₅Cl) first solid electrolyte layer/(5 wt% LACO+95 wt% Li₆PS₅Cl) second solid electrolyte layer/Ag-C anode layer

An all-solid-state secondary battery was manufactured in the same manner as in Example 1, except that a first solid electrolyte layer and a second solid electrolyte layer prepared according to the following process were used. The first solid electrolyte layer was disposed in contact with an anode, and the second solid electrolyte layer was disposed in contact with a cathode.

A first mixture was prepared by adding a Li₆PS₅Cl solid electrolyte (D₅₀=3.0 µm, crystalline) which was an argyrodite-type crystal, the LACO inorganic filler prepared in Preparation Example 1, and an acrylic binder. In the first mixture, the total weight of Li₆PS₅Cl and LACO is 98.5 wt%, and a content of the acrylic binder is 1.5 wt%. A mixing weight ratio of Li₆PS₅Cl to LACO is 95:5.

The first mixture was provided onto a PET substrate and plate-pressed at a pressure of 200 MPa for 10 minutes to prepare the first solid electrolyte layer. A melting point of the LACO inorganic filler is about 135 °C.

Separately, a second mixture was prepared by adding a Li₆PS₅Cl solid electrolyte (D₅₀=3.0 µm, crystalline) which was an argyrodite-type crystal, the LACO inorganic filler prepared in Preparation Example 1, and an acrylic binder. In the second mixture, the total weight of Li₆PS₅Cl and LACO is 98.5 wt%, and a content of the acrylic binder is 1.5 wt%. A mixing weight ratio of Li₆PS₅Cl to LACO is 90:10.

The second mixture was provided onto a PET substrate and plate-pressed at a pressure of 200 MPa for 10 minutes to prepare the solid electrolyte layer. A melting point of the LACO inorganic filler is about 135 °C.

Example 6: Carbon-coated Al cathode current collector/Li₆PS₅Cl (15) and Li₂S-LiI-CNF cathode active material layer/(10 wt% LACO+90 wt% Li₆PS₅Cl) solid electrolyte layer/Ag-C anode layer

An all-solid-state secondary battery was manufactured in the same manner as in Example 1, except that an aluminum foil cathode current collector without a carbon coating layer was used, and a content ratio of a sulfide-based solid electrolyte to an inorganic filler in a cathode active material layer was changed from 14:1 to 15:0 (sulfide-based solid electrolyte alone).

### Example 7: Carbon-coated Al cathode current collector/Li₆PS₅Cl+LACO (37:3) and Li₂S-LiI-CNF cathode active material layer/(10 wt% LACO+90 wt% Li₆PS₅Cl) solid electrolyte layer/Ag-C anode layer

An all-solid-state secondary battery was manufactured in the same manner as in Example 1, except that, when a cathode active material layer and a solid electrolyte layer were prepared, LACO110 of Preparation Example 2 was used as an inorganic filler instead of LACO of Preparation Example 1.

### Example 8: Carbon-coated Al cathode current collector/Li₆PS₅Cl+LACO (14:1) and NCA cathode active material layer/(10 wt% LACO+90 wt% Li₆PS₅Cl) solid electrolyte layer/Ag-C anode layer

An all-solid-state secondary battery was manufactured in the same manner as in Example 1, except that a cathode layer was prepared according to the following process.

### (Preparation of cathode layer)

Li₂O-ZrO₂ (LZO)-coated LiNi₀.₈Co₀.₁₅Al₀.₀₅O₂ (NCA) was prepared as a cathode active material. The LZO-coated NCA was prepared according to the method disclosed in Korean Patent Publication No. 10-2016-0064942. Li₆PS₅Cl (D₅₀=0.5 µm, crystalline), which was an argyrodite-type crystal, was prepared as a solid electrolyte. LACO prepared in Preparation Example 1 was prepared as an inorganic filler. A PTFE binder was prepared as a binder. Amorphous CNTs were prepared as a conductive material. A slurry, which was prepared by mixing these materials with a xylene solvent at a weight ratio of cathode active material:solid electrolyte:inorganic filler:conductive agent:binder=85:14:1:3:2, was formed into a sheet, and then the sheet was vacuum-dried at a temperature of 40 °C for 8 hours to prepare a cathode sheet. The prepared cathode sheet was disposed on a carbon layer of a cathode current collector consisting of aluminum foil, of which one side was coated with a carbon layer, and heated and roll-pressed at a temperature of 85 °C to prepare a cathode layer. The total thickness of the cathode layer was about 112 µm. A thickness of the aluminum foil coated with carbon was about 20 µm. A thickness of the carbon layer was about 1 µm.

An elastic modulus of Li₆PS₅Cl was in a range of about 22 to 30 GPa at a temperature of 30 °C. The elastic modulus of Li₆PS₅Cl was measured by using a DMA.

### Example 9: Carbon-coated Al cathode current collector/Li₆PS₅Cl+LACO (14:1) and NCA cathode active material layer/(10 wt% LACO+90 wt% bimodal Li₆PS₅Cl) (bimodal sulfide-based SE) solid electrolyte layer/Ag-C anode layer

An all-solid-state secondary battery was manufactured in the same manner as in Example 8, except that a solid electrolyte layer was prepared according to the following process.

A mixture was prepared by adding a Li₆PS₅Cl solid electrolyte (D₅₀=3.0 µm, crystalline) which was an argyrodite-type crystal, a Li₆PS₅Cl solid electrolyte (D₅₀=1.0 µm, crystalline), the LACO inorganic filler prepared in Preparation Example 1, and an acrylic binder. In the mixture, the total weight of Li₆PS₅Cl and LACO is 98.5 wt%, and a content of the acrylic binder is 1.5 wt%. A mixing weight ratio of Li₆PS₅Cl to LACO is 90:10. A mixing weight ratio of the Li₆PS₅Cl solid electrolyte (D₅₀=3.0 µm, crystalline) to the Li₆PS₅Cl solid electrolyte (D₅₀=1.0 µm, crystalline) is 2:8.

The mixture was provided onto a PET substrate and plate-pressed at a pressure of 200 MPa for 10 minutes to prepare the solid electrolyte layer. A melting point of the LACO inorganic filler is about 135 °C.

### Example 10: Carbon-coated Al cathode current collector/Li₆PS₅Cl+LACO (14:1) and NCA cathode active material layer/(10 wt% LACO+90 wt% Li₆PS₅Cl) first solid electrolyte layer/(5 wt% LACO+95 wt% Li₆PS₅Cl) second solid electrolyte layer/Ag-C anode layer

An all-solid-state secondary battery was manufactured in the same manner as in Example 7, except that a first solid electrolyte layer and a second solid electrolyte layer prepared according to the following process were used. The first solid electrolyte layer was disposed in contact with an anode, and the second solid electrolyte layer was disposed in contact with a cathode.

A first mixture was prepared by adding a Li₆PS₅Cl solid electrolyte (D₅₀=3.0 µm, crystalline) which was an argyrodite-type crystal, the LACO inorganic filler prepared in Preparation Example 1, and an acrylic binder. In the first mixture, the total weight of Li₆PS₅Cl and LACO is 98.5 wt%, and a content of the acrylic binder is 1.5 wt%. A mixing weight ratio of Li₆PS₅Cl to LACO is 95:5.

The first mixture was provided onto a PET substrate and plate-pressed at a pressure of 200 MPa for 10 minutes to prepare a solid electrolyte layer. A melting point of the LACO inorganic filler is about 135 °C.

Separately, a second mixture was prepared by adding a Li₆PS₅Cl solid electrolyte (D₅₀=3.0 µm, crystalline) which was an argyrodite-type crystal, the LACO inorganic filler prepared in Preparation Example 1, and an acrylic binder. In the second mixture, the total weight of Li₆PS₅Cl and LACO is 98.5 wt%, and a content of the acrylic binder is 1.5 wt%. A mixing weight ratio of Li₆PS₅Cl to LACO is 90:10.

The second mixture was provided onto a PET substrate and plate-pressed at a pressure of 200 MPa for 10 minutes to prepare the solid electrolyte layer. A melting point of the LACO inorganic filler was about 135 °C. A melting point of the LACO inorganic filler is about 135 °C.

### Example 11: Bare Al/Li₆PS₅Cl (15) and NCA/(10 wt% LACO+90 wt% Li₆PS₅Cl) solid electrolyte layer/Ag-C anode layer

An all-solid-state secondary battery was manufactured in the same manner as in Example 8, except that an aluminum foil cathode current collector without a carbon coating layer was used, and a content ratio of a sulfide-based solid electrolyte to an inorganic filler in a cathode active material layer was changed from 14:1 to 15:0 (sulfide-based solid electrolyte alone).

### Comparative Example 1: Bare Al/Li₆PS₅Cl (40) and Li₂S-LiI-CNF/Li₆PS₅Cl/Ag-C anode layer

An all-solid-state secondary battery was manufactured in the same manner as in Example 1, except that an aluminum foil cathode current collector without a carbon coating layer was used, a content ratio of a sulfide-based solid electrolyte to an inorganic filler was changed from 90:10 to 40:0 (sulfide-based solid electrolyte alone), and a solid electrolyte layer was prepared according to the following method.

A mixture was prepared by adding a solid electrolyte Li₆PS₅Cl (D₅₀=3.0 µm, crystalline), which was an argyrodite-type crystal, and an acrylic binder in a weight ratio of 98.5:1.5. While octyl acetate was added to the mixture, the mixture was stirred to prepare a slurry. By using a bar coater, the prepared slurry was applied onto a PET substrate and dried in air at a temperature of 80 °C for 10 minutes to prepare a stack. The prepared stack was vacuum-dried at a temperature of 80 °C for 2 hours to prepare a solid electrolyte layer.

### Comparative Example 2: Bare Al/Li₆PS₅Cl (15) and NCA/Li₆PS₅Cl/Ag-C anode layer

An all-solid-state secondary battery was manufactured in the same manner as in Example 7, except that an aluminum foil cathode current collector without a carbon coating layer was used, a content ratio of a sulfide-based solid electrolyte to an inorganic filler was changed from 14:1 to 15:0 (sulfide-based solid electrolyte alone), and a solid electrolyte layer was prepared according to the following method.

A mixture was prepared by adding a solid electrolyte Li₆PS₅Cl (D₅₀=3.0 µm, crystalline), which was an argyrodite-type crystal, and an acrylic binder in a weight ratio of 98.5:1.5. While octyl acetate was added to the mixture, the mixture was stirred to prepare a slurry. By using a bar coater, the prepared slurry was applied onto a PET substrate and dried in air at a temperature of 80 °C for 10 minutes to prepare a stack. The prepared stack was vacuum-dried at a temperature 80 °C for 2 hours to prepare the solid electrolyte layer.

### Evaluation Example 1: Charge-discharge test

The charge and discharge characteristics of the all-solid-state secondary batteries manufactured in Examples 1 to 7 and Comparative Example 1 were evaluated through the following charge-discharge test. The charge-discharge test was performed by putting the all-solid-state secondary batteries into a thermostatic bath at a temperature of 45 °C.

In a 1st cycle, the all-solid-state secondary batteries were charged at a constant current of 0.1 C for 12.5 hours until a battery voltage reached 2.5 V to 2.8 V. Subsequently, the all-solid-state secondary batteries were discharged at a constant current of 0.1 C for 12.5 hours until the battery voltage reached 0.3 V.

The discharge capacity of the 1st cycle was defined as the standard capacity. The standard capacity is shown as the specific capacity of Li₂S-LiI-CNF in Table 1 below.

From a 2nd cycle, charging and discharging were performed up to a 500th cycle under the same conditions as the 1st cycle. Measurement results are shown in Table 2 below.

The number of cycles refers to the number of cycles required for the discharge capacity to decrease to 80 % of the standard capacity after the 2nd cycle. It was considered that, as the number of cycles increased, lifespan characteristics improved.

### Evaluation Example 2: Evaluation of high-rate characteristics

The high-rate characteristics of the all-solid-state secondary batteries of Examples 1 to 7 and Comparative Example 1 were evaluated by the following charge-discharge test. The charge-discharge test was performed by putting the all-solid-state secondary batteries into a thermostatic bath at a temperature of 45 °C.

The all-solid-state secondary batteries were charged at a constant current of 0.1 C-rate at a temperature of 45 °C until a voltage reached 2.5 V (vs. Li), and then, in a constant voltage mode, while 2.5 V was maintained, the charging was cut-off at a constant current of 0.05 C-rate. Subsequently, the all-solid-state secondary batteries were discharged at a constant current of 0.1 C-rate until the voltage reached 0.3 V (vs. Li) during discharging (formation cycle).

The all-solid-state secondary batteries subjected to the formation cycle were charged at a constant current of 0.2 C-rate at a temperature of 45 °C until the voltage reached 2.5 V (vs. Li). Subsequently, the all-solid-state secondary batteries were discharged at a constant current of 0.2 C-rate until the voltage reached 0.3 V (vs. Li) during discharging (1st cycle).

The all-solid-state secondary batteries subjected to the 1st cycle were charged at a constant current of 0.2 C-rate at a temperature of 45 °C until the voltage reached 4.3 V (vs. Li). Subsequently, the all-solid-state secondary batteries were discharged at a constant current of 0.33 C-rate until the voltage reached 2.5 V (vs. Li) during discharging (2nd cycle).

The all-solid-state secondary batteries subjected to the 2nd cycle were charged at a constant current of 0.2 C-rate at a temperature of 45 °C until the voltage reached 2.5 V (vs. Li). Subsequently, the all-solid-state secondary batteries were discharged at a constant current of 0.5 C-rate until the voltage reached 0.3 V (vs. Li) during discharging (3rd cycle).

The all-solid-state secondary batteries subjected to the 3rd cycle were charged at a constant current of 0.2 C-rate at a temperature of 45 °C until the voltage reached 2.5 V (vs. Li). Subsequently, the all-solid-state secondary batteries were discharged at a constant current of 1.0 C-rate until the voltage reached 0.3 V (vs. Li) during discharging (4th cycle).

The all-solid-state secondary batteries were rested for 10 minutes after each charge/discharge cycle in all charge/discharge cycles. Some of charge-discharge test results at room temperature are shown in Table 1 below. High-rate characteristics are defined by Equation 1 below. 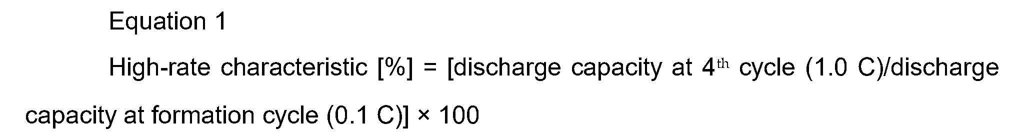 High-rate characteristic [%] = [discharge capacity at 4th cycle (1.0 C)/discharge capacity at formation cycle (0.1 C)] × 100 Equation 1

**[Table 1]**

| Classification | Specific capacity [mAh/g] | Number of cycles [times] | High-rate characteristic (%) |
|---|---|---|---|
| Example 1: Carbon-coated Al cathode current collector/Li₆PS₅Cl+LACO (37:3) and Li₂S-LiI-CNF cathode active material layer/(10 wt% LACO+90 wt% Li₆PS₅Cl) solid electrolyte layer/Ag-C anode layer | 825 | 352 | 87.8 |
| Example 2: Carbon-coated Al cathode current collector/Li₆PS₅Cl+LACO (37:3) and Li₂S-LiI-CNF cathode active material layer/(5 wt% LACO+95 wt% Li₆PS₅Cl) solid electrolyte layer/Ag-C anode layer | 830 | 381 | 88.9 |
| Example 3: Carbon-coated Al cathode current collector/Li₆PS₅Cl+LACO (37:3) and Li2S-LiI-CNF cathode active material layer/(1 wt% LACO+99 wt% Li₆PS₅Cl) solid electrolyte layer/Ag-C anode layer | 815 | 315 | 86.8 |
| Example 4: Carbon-coated Al cathode current collector/Li₆PS₅Cl+LACO (37:3) and Li₂S-LiI-CNF cathode active material layer/(10 wt% LACO+90 wt% bimodal Li₆PS₅Cl) (bimodal sulfide-based SE) solid electrolyte layer/Ag-C anode layer | 850 | 401 | 91.5 |
| Example 5: Carbon-coated Al cathode current collector/Li₆PS₅Cl+LACO (37:3) and Li₂S-LiI-CNF cathode active material layer/(10 wt% LACO+90 wt% Li₆PS₅Cl) first solid electrolyte layer/(5 wt% LACO+95 wt% Li₆PS₅Cl) second solid electrolyte layer/Ag-C anode layer | 870 | 480 | 93.5 |
| Example 6: Carbon-coated Al cathode current collector/Li₆PS₅Cl (40) and Li₂S-LiI-CNF cathode active material layer/(10 wt% LACO+90 wt% Li₆PS₅Cl) solid electrolyte layer/Ag-C anode layer | 805 | 285 | 86.5 |
| Comparative Example 1: Bare Al/Li₆PS₅Cl (40) and Li₂S-LiI-CNF/Li₆PS₅Cl/Ag-C anode layer | 801 | 196 | 85.4 |

As shown in Table 1, the all-solid-state secondary batteries of Examples 1 to 6 exhibited improved charge and discharge characteristics as compared to the all-solid-state secondary battery of Comparative Example 1. Among them, it was seen that the all-solid-state secondary battery of Example 1 had excellent charge and discharge characteristics by including inorganic fillers in both a solid electrolyte layer and a cathode active material layer, and the charge and discharge characteristics thereof were further improved as compared to the all-solid-state secondary battery of Example 6, which contained an inorganic filler only in a solid electrolyte layer.

Although not shown in Table 1, the all-solid-state secondary battery of Example 7 exhibited charge and discharge characteristics similar to those of the all-solid-state secondary battery of Example 1.

### Evaluation Example 3: Charge-discharge test

The charge and discharge characteristics of the all-solid-state secondary batteries manufactured in Example 8 to 11 and Comparative Example 2 were evaluated by the following charge-discharge test. The charge-discharge test was performed by putting the all-solid-state secondary batteries into a thermostatic bath at a temperature of 45 °C.

In a 1st cycle, the all-solid-state secondary batteries were charged at a constant current of 0.1 C for 12.5 hours until a battery voltage reached 4.3 V. Subsequently, the all-solid-state secondary batteries were discharged at a constant current of 0.1 C for 12.5 hours until the battery voltage reached 2.5 V.

The discharge capacity of the 1st cycle was defined as the standard capacity. The standard capacity is shown as the specific capacity of NCA in Table 1 below.

From a 2nd cycle, charging and discharging were performed up to a 500th cycle under the same conditions as the 1st cycle. Measurement results are shown in Table 2 below.

The number of cycles refers to the number of cycles required for the discharge capacity to decrease to 80 % of the standard capacity after the 2nd cycle. It was considered that, as the number of cycles increased, lifespan characteristics improved.

### Evaluation Example 4: Evaluation of high-rate characteristics

The high-rate characteristics of the all-solid-state secondary batteries of Examples 8 to 11 and Comparative Example 2 were evaluated by the following charge-discharge test. The charge-discharge test was performed by putting the all-solid-state secondary batteries into a thermostatic bath at a temperature of 45 °C.

The all-solid-state secondary batteries were charged at a constant current of 0.1 C-rate at a temperature of 45 °C until a voltage reached 4.3 V (vs. Li), and then, in a constant voltage mode, while 4.3 V was maintained, the charging was cut-off at a constant current of 0.05 C-rate. Subsequently, the all-solid-state secondary batteries were discharged at a constant current of 0.1 C-rate until the voltage reached 2.5 V (vs. Li) during discharging (formation cycle).

The all-solid-state secondary batteries subjected to the formation cycle were charged at a constant current of 0.2 C-rate at a temperature of 45 °C until the voltage reached 4.3 V (vs. Li). Subsequently, the all-solid-state secondary batteries were discharged at a constant current of 0.2 C-rate until the voltage reached 2.5 V (vs. Li) during discharging (1st cycle).

The all-solid-state secondary batteries subjected to the 1st cycle were charged at a constant current of 0.2 C-rate at a temperature of 45 °C until the voltage reached 4.3 V (vs. Li). Subsequently, the all-solid-state secondary batteries were discharged at a constant current of 0.33 C-rate until the voltage reached 2.5 V (vs. Li) during discharging (2nd cycle).

The all-solid-state secondary batteries subjected to the 2nd cycle were charged at a constant current of 0.2 C-rate at a temperature of 45 °C until the voltage reached 4.3 V (vs. Li). Subsequently, the all-solid-state secondary batteries were discharged at a constant current of 0.5 C-rate until the voltage reached 2.5 V (vs. Li) during discharging (3rd cycle).

The all-solid-state secondary batteries subjected to the 3rd cycle were charged at a constant current of 0.2 C-rate at a temperature of 45 °C until the voltage reached 4.3 V (vs. Li). Subsequently, the all-solid-state secondary batteries were discharged at a constant current of 1.0 C-rate until the voltage reached 2.5 V (vs. Li) during discharging (4th cycle).

The all-solid-state secondary batteries were rested for 10 minutes after each charge/discharge cycle in all charge/discharge cycles. Some of charge-discharge test results at room temperature are shown in Table 2 below. High-rate characteristics are defined by Equation 1 below. 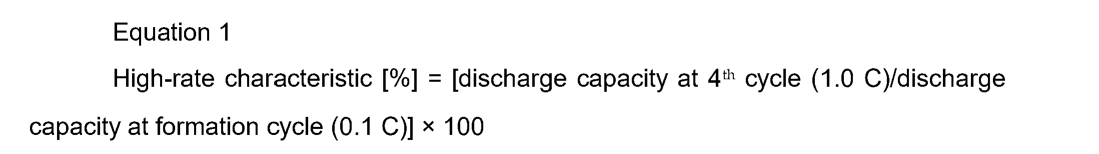 High-rate characteristic [%] = [discharge capacity at 4th cycle (1.0 C)/discharge capacity at formation cycle (0.1 C)] × 100 Equation 1

**[Table 2]**

| Classification | Specific capacity [mAh/g] | Number of cycles [times] | High-rate characteristic (%) |
|---|---|---|---|
| Example 8: Carbon-coated Al cathode current collector/Li₆PS₅Cl+LACO (14:1) and NCA cathode active material layer/(10 wt% LACO+90 wt% Li₆PS₅Cl) solid electrolyte layer/Ag-C anode layer | 186.5 | 501 | 92.5 |
| Example 9: Carbon-coated Al cathode current collector/Li₆PS₅Cl+LACO (14:1) and NCA cathode active material layer/(10 wt% LACO+90 wt% bimodal Li₆PS₅Cl) (bimodal sulfide-based SE) solid electrolyte layer/Ag-C anode layer | 187.5 | 589 | 93.8 |
| Example 10: Carbon-coated Al cathode current collector/Li₆PS₅Cl+LACO (14:1) and NCA cathode active material layer/(10 wt% LACO+90 wt% Li₆PS₅Cl) first solid electrolyte layer/(5 wt% LACO+95 wt% Li₆PS₅Cl) second solid electrolyte layer/Ag-C anode layer | 188 | 650 | 94.2 |
| Example 11: Bare Al/Li₆PS₅Cl (15) and NCA/(10 wt% LACO+90 wt% Li₆PS₅Cl) solid electrolyte layer/Ag-C anode layer | 181 | 486 | 91.8 |
| Comparative Example 2: Bare Al/Li₆PS₅Cl (15) and NCA/Li₆PS₅Cl/Ag-C anode layer | 180.1 | 385 | 90.6 |

As shown in Table 2, the all-solid-state secondary batteries of Examples 8 to 11 exhibited improved charge and discharge characteristics as compared to the all-solid-state secondary battery of Comparative Example 2.

The all-solid-state secondary batteries of Examples 9 to 11 had excellent charge and discharge characteristics by including inorganic fillers in both a solid electrolyte layer and a cathode active material layer. In particular, as compared to the all-solid-state secondary of Example 11, which included a solid electrolyte layer containing an inorganic filler but did not include an inorganic filler in a cathode active material layer, the all-solid-state secondary battery of Example 8 included an inorganic filler in a cathode active material layer, and thus it was determined that stability was improved and an increase in internal resistance was suppressed, thereby further improving charge and discharge characteristics.

On the other hand, since the all-solid-state secondary battery of Comparative Example 2 did not include a solid electrolyte layer containing an inorganic filler, due to an increase in interfacial resistance caused by a volume change during charging and discharging, the charge and discharge characteristics thereof were degraded as compared to the all-solid-state secondary batteries of Examples 8 to 11.

Although not shown in the drawings, it was confirmed that, after initial charging in the all-solid-state secondary batteries of Examples 8 to 11, a second anode active material layer was formed as a lithium metal layer between a first anode active material layer and an anode current collector.

The formation of the lithium metal layer was confirmed through a cross-sectional SEM image of the all-solid-state secondary battery.

## Claims

1. An all-solid-state secondary battery comprising:
a cathode layer;
an anode layer; and
a solid electrolyte layer between the cathode layer and the anode layer,
wherein the anode layer comprises an anode current collector and a first anode active material layer on one side of the anode current collector,
the solid electrolyte layer comprises a sulfide-based solid electrolyte and an inorganic filler, and
the inorganic filler comprises a lithium metal oxyhalide represented by Formula 1 below:
Formula 1 LiₐM_{b}O_{c}Cl_{d}
wherein, in Formula 1, 0<a≤3, 0<b≤3, 0<c≤3, 0<d≤8, c<d, a/(a+b+c+d)<0.5, and M is a metal selected from Groups 3 to 15 of the Periodic Table of the Elements.

2. The all-solid-state secondary battery of claim 1, wherein a content of the inorganic filler in the solid electrolyte layer is in a range of 1 to 15 parts by weight with respect to 100 parts by weight of the solid electrolyte layer.

3. The all-solid-state secondary battery of claim 1, wherein the inorganic filler is disposed in pores of the sulfide-based solid electrolyte in the solid electrolyte layer.

4. The all-solid-state secondary battery of claim 1, wherein the inorganic filler is amorphous or glassy and has a transition temperature of 20 °C or less and a melting point of 100 °C or more.

5. The all-solid-state secondary battery of claim 1, wherein the inorganic filler is an ion-conductive inorganic filler and has an ionic conductivity of 0.01 mS/cm or more at a temperature of 25 °C and a pressure of 1 atm and an elastic modulus of 10 GPa or less at a temperature of 30 °C.

6. The all-solid-state secondary battery of claim 1, wherein the metal M of the lithium metal oxyhalide comprises Fe, Ga, In, As, Sb, Mo, Bi, B, or a combination thereof.

7. The all-solid-state secondary battery of claim 1, wherein the lithium metal oxyhalide comprises: LiAl_{b}O_{c}Cl_{d} (0<b≤3, 0<c≤2, 0<d≤4, c<d, and 1/(1+b+c+d)<0.5); LiFe_{b}O_{c}Cl_{d} (0<b≤3, 0<c≤2, 0<d≤4, c<d, and 1/(1+b+c+d)<0.5); LiGa_{b}O_{c}Cl_{d} (0<b≤3, 0<c≤2, 0<d≤4, c<d, and 1/(1+b+c+d)<0.5); LiIn_{b}O_{c}Cl_{d} (0<c≤2; 0<d≤4; c<d; 1/(1+b+c+d)<0.5); LiAs_{b}O_{c}Cl_{d} (0<b≤3, 0<c≤2, 0<d≤4, c<d, and 1/(1+b+c+d)<0.5); LiSb_{b}O_{c}Cl_{d} (0<b≤3, 0<c≤2, 0<d≤4, c<d, and 1/(1+b+c+d)<0.5); LiMo_{b}O_{c}Cl_{d} (0<b≤3, 0<c≤2, 0<d≤4, c<d, and 1/(1+b+c+d)<0.5); LiBi_{b}O_{c}Cl_{d} (0<b≤3, 0<c≤2, 0<d≤4, c<d, and 1/(1+b+c+d)<0.5); LiB_{b}O_{c}Cl_{d} (0<b≤3, 0<c≤2, 0<d≤4, c<d, and 1/(1+b+c+d)<0.5); LiAl_{b-e}FeₑO_{c}Cl_{d} (0<b≤3, 0<c≤2, 0<d≤4, 0<e<b, c<d, and 1/(1+b+c+d+e)<0.5); LiAl_{b-e}GaₑO_{c}Cl_{d} (0<b≤3, 0<c≤2, 0<d≤4, 0<e<b, c<d, and 1/(1+b+c+d+e)<0.5); LiAl_{b-e}InₑO_{c}Cl_{d} (0<b≤3, 0<c≤2, 0<d≤4, 0<e<b, c<d, and 1/(1+b+c+d+e)<0.5); LiAl_{b-e}AsₑO_{c}Cl_{d} (0<b≤3, 0<c≤2, 0<d≤4, 0<e<b, c<d, and 1/(1+b+c+d+e)<0.5); LiAl_{b-e}SbₑO_{c}Cl_{d} (0<b≤3, 0<c≤2, 0<d≤4, 0<e<b, c<d, and 1/(1+b+c+d+e)<0.5); LiAl_{b-e}MoₑO_{c}Cl_{d} (0<b≤3, 0<c≤2, 0<d≤4, 0<e<b, c<d, and 1/(1+b+c+d+e)<0.5); LiAl_{b-e}BiₑO_{c}Cl_{d} (0<b≤3, 0<c≤2, 0<d≤4, 0<e<b, c<d, and 1/(1+b+c+d+e)<0.5); LiAl_{b-e}BₑO_{c}Cl_{d} (0<b≤3, 0<c≤2, 0<d≤4, 0<e<b, c<d, and 1/(1+b+c+d+e)<0.5); or a combination thereof.

8. The all-solid-state secondary battery of claim 1, wherein the sulfide-based solid electrolyte in the solid electrolyte layer comprises a small-particle-diameter first-sulfide-based solid electrolyte having an average particle diameter of 0.5 to 1.9 µm and a large-particle-diameter first-sulfide-based solid electrolyte having an average particle diameter of 2 to 5 µm, and a content of the small-particle-diameter first-sulfide-based solid electrolyte is greater than a content of the large-particle-diameter second-sulfide-based solid electrolyte.

9. The all-solid-state secondary battery of claim 1, wherein the solid electrolyte layer comprises: a first solid electrolyte layer comprising a sulfide-based solid electrolyte and an inorganic filler; and a second solid electrolyte layer comprising a sulfide-based solid electrolyte and an inorganic filler,
the first solid electrolyte layer is disposed in contact with an anode,
the second solid electrolyte layer is disposed in contact with a cathode, and
a content of the inorganic filler in the first solid electrolyte layer is smaller than a content of the inorganic filler in the first solid electrolyte layer.

10. The all-solid-state secondary battery of claim 1, wherein the cathode active material comprises an oxide-based cathode active material, a sulfide-based cathode active material, or a combination thereof,
the oxide-based cathode active material comprises a lithium transition metal oxide, a metal oxide, or a combination thereof, wherein the lithium transition metal oxide comprises lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof, and the lithium oxide comprises iron oxide, vanadium oxide, or a combination thereof, and
the sulfide-based cathode active material comprises nickel sulfide, copper sulfide, Li₂S, a Li₂S-containing composite, or a combination thereof.

11. The all-solid-state secondary battery of claim 10, wherein the Li₂S composite is a composite of Li₂S and a lithium salt, a composite of Li₂S and a carbon-based material, a composite of Li₂S, a carbon-based material, and a solid electrolyte, a composite of Li₂S and a solid electrolyte, a composite of Li₂S, a carbon-based material, and a lithium salt, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or a combination thereof.

12. The all-solid-state secondary battery of claim 1, wherein the Li₂S composite comprises a solid solution of Li₂S and a lithium salt, wherein a size of a Li₂S crystallite obtained from an X-ray diffraction (XRD) spectrum of the composite is 20 nm or less, and
the Li₂S composite is a composite of Li₂S, LiI, and a carbon-based material, wherein a size of a Li₂S crystallite obtained from an XRD spectrum of the composite is less than 9.9 nm, and the composite comprises a solid solution of Li₂S and LiI.

13. The all-solid-state secondary battery of claim 1, wherein the sulfide-based solid electrolyte comprises at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number and Z is one of Ge, Zn, and Ga), Li₂S-GeS₂, Li₂S-SiS₂-Li₃PO₄, Li₂S-SiS₂-LiₚMO_{q} (p and q are each a positive number and M is one of P, Si, Ge, B, Al, Ga, and In), Li₇₋ₓPS₆₋ₓClₓ (0<x<2), Li₇₋ₓPS₆₋ₓBrₓ (0<x<2), and Li₇₋ₓPS₆₋ₓIₓ,(0≤x≤2),
the sulfide-based solid electrolyte comprises an argyrodite-type solid electrolyte, and
the argyrodite-type solid electrolyte comprises at least one selected from Li₆PS₅Cl, Li₆PS₅Br, and Li₆PS₅I and has a density of 1.5 to 2.0 g/cc.

14. The all-solid-state secondary battery of claim 1, wherein the cathode active material layer further comprises at least one selected from a conductive material and a binder,
the conductive material comprises a carbon-based material,
the carbon-based material is amorphous,
the carbon-based material comprises a fibrous carbon-based material,
the fibrous carbon-based material comprises a fibrous carbon nanostructure, and
the fibrous carbon nanostructure comprises carbon nanofibers, carbon nanotubes, carbon nanobelts, carbon nanorods, or a combination thereof.

15. The all-solid-state secondary battery of claim 1, further comprising an interlayer between the cathode current collector and the cathode active material layer,
wherein the interlayer comprises a carbon-based conductive material.

16. The all-solid-state secondary battery of claim 1, wherein the first anode active material layer comprises an anode active material and a binder,
the anode active material has a particle form and an average particle diameter of 4 µm or less,
the anode active material comprises at least one selected from a carbon-based anode active material and a metal or metalloid anode active material,
the carbon-based anode active material comprises amorphous carbon, crystalline carbon, porous carbon, or a combination thereof, and
the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof.

17. The all-solid-state secondary battery of claim 16, wherein the anode active material comprises a mixture of first particles consisting of amorphous carbon and second particles consisting of a metal or metalloid,
a content of the second particles is in a range of 1 to 60 wt% with respect to a total weight of the mixture,
the all-solid-state secondary battery further comprises a second anode active material layer disposed between the anode current collector and the first anode active material layer and/or between the anode current collector and the electrolyte layer, and
the second anode active material layer is a metal layer, wherein the metal layer comprises lithium or a lithium alloy.

18. The all-solid-state secondary battery of claim 1, wherein the solid electrolyte layer comprises a binder.

19. The all-solid-state secondary battery of claim 1, wherein the cathode active material layer comprises and contains a lithium sulfide-based cathode active material and an inorganic filler, and
the inorganic filler is a lithium metal oxyhalide represented by Formula 1 below:
Formula 1 LiₐM_{b}O_{c}Cl_{d}
wherein, in Formula 1, 0<a≤3, 0<b≤3, 0<c≤3, 0<d≤8, c<d, a/(a+b+c+d)<0.5, and M is a metal selected from Groups 3 to 15 of the Periodic Table of the Elements.

20. The all-solid-state secondary battery of claim 1, wherein at least one of the cathode current collector and the anode current collector comprises a base film and a metal layer disposed on one side or both sides of the base film,
the base film comprises a polymer, wherein the polymer comprises polyethylene terephthalate (PET), polyethylene (PE), polypropylene (PP), polybutylene terephthalate (PBT), polyimide (PI), or a combination thereof, the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and
the all-solid-state secondary battery further comprises an inactive member disposed on one side of the cathode.
